# EUROPEAN PATENT APPLICATION

(11) **EP 4 501 112 A1**
(43) Date of publication of application: **05.02.2025**
(21) Application number: 23188974.2
(22) Date of filing: 01.08.2023
(51) Int. Cl.: A01N 37/02, A01P 15/00

(54) **PLANT DEFENSE ELICITORS**

(71) Applicant: Globachem NV, 3800 Sint-Truiden (BE)
(72) Inventor: The designation of the inventor has not yet been filed
(74) Representative: Calysta NV

(57) **Abstract**

The present invention relates to the elicitors of defensive responses in useful plants to build up the plants' natural defense system against various stresses and pathogens wherein elicitors are selected from pelargonic acid, its agriculturally acceptable salts and esters.

## Description

### Technical field

The present invention relates to elicitors of defensive responses in useful plants to build up the plants' natural defense system against various stresses and pathogens.

The invention relates to uses and methods employing fatty acids, preferably pelargonic acid, or its agriculturally acceptable salt, ester or amide derivatives, as plant pathogen and stress defense elicitors.

Furthermore, provided herein are agricultural compositions comprising pelargonic acid or its agriculturally acceptable salts or esters, and applications thereof.

### Background art

The invention relates to fatty acids, in particular pelargonic acid, or its agriculturally acceptable salt, esters or amide derivatives, as plant pathogen and stress defense elicitors, which demonstrate highly effective activity combined with low phytotoxicity.

Pelargonic acid has long been known as a non-selective, contact herbicide. It has now been surprisingly found that pelargonic acid used at selected rates is highly effective as plant pathogen and stress defense elicitor in useful plants.

Due to the favorable environmental profile of pelargonic acid, the present invention represents an important new solution for farmers to control or prevent damage of useful plants caused by plant pathogens and stresses.

The use of pelargonic acid to control insects in a broad range of crops has been disclosed in PCT/EP2023/051467, PCT/EP2023/051472, PCT/EP2023/051473, PCT/EP2023/051475, PCT/EP2023/051478, PCT/EP2023/051479, PCT/EP2023/051484, PCT/EP2023/051486, and PCT/EP2023/051490.

### Disclosure of the invention

Plants are adversely affected by a wide range of environmental stresses categorized as (a) abiotic stress which includes salinity, floods, drought, temperature extremes, heavy metals, radiation, etc., and (b) biotic stress such as attacks by various pathogens such as fungi, bacteria, oomycetes, nematodes, and herbivores. If the stress is prolonged, plant growth, and productivity are severely diminished.

To overcome those environmental stresses, plants have evolved complex physiological and biochemical adaptations systems, such as cell signaling pathways and cellular responses, production of stress proteins, upregulation of the antioxidant machinery, and accumulation of compatible solutes.

Compounds, which when perceived by a plant give rise to such defense responses, are commonly referred to as plant pathogen defense elicitors, plant elicitors or simply elicitors.

The fact that the pelargonic acid compositions of the present invention are well tolerated by plants at the concentrations required for eliciting defensive responses allows the treatment of above-ground parts of plants, of propagation stock and the locus of the plants, e.g., of the soil.

According to the invention all plants and plant parts can be treated. By plants, it is meant all plants and plant populations, cultivars and plant varieties.

By plant parts, it is meant all above ground and below ground parts and organs of plants such as shoot, leaf, blossom and root, whereby for example leaves, needles, stems, branches, blossoms, fruiting bodies, fruits and seed as well as roots, corms, rhizomes and runners are included.

Pelargonic acid, when used according to the present invention, is well tolerated by the environment and when well tolerated by the plants is suitable for protecting plants and plant organs.

While the use of pelargonic acid is preferred, an embodiment of the present invention comprises the use of a pelargonic acid derivative alone or in mixtures with pelargonic acid.

The pelargonic acid derivatives suitable for use in the present invention are selected from salts, esters and amides of pelargonic acid.

Typically, if used, the derivative of the pelargonic acid is a salt or an ester of pelargonic acid.

The ester of pelargonic acid is typically an ester of pelargonic acid with an alcohol such as methanol, ethanol, 1 -propanol, 2-propanol, butanol, ethane- 1,2-diol, propane-1, 3-diol, propane-1, 2, 3-triol (glycerol) and mixtures thereof.

The salts of pelargonic acid are typically metal salts, ammonium salts, alkanolamine salts or the choline salt of pelargonic acid. The metal salts are typically alkali metal salts, alkaline-earth metal salts, but also comprise aluminum, copper, iron, and zinc salts. Alkali metal salts of fatty acids include lithium, sodium, potassium, and rubidium salts of pelargonic acid. Alkaline-earth metal salts of pelargonic acid include magnesium and calcium salts. Such salts may be formed by reacting the pelargonic acid with a base comprising the desired metal cation, for instance by reacting one or more fatty acids with sodium hydroxide or potassium hydroxide in case of alkali metals, magnesium hydroxide or calcium hydroxide for alkaline-earth metals, or aluminum hydroxide, copper hydroxide, zinc hydroxide or iron hydroxide for other metals. Alkanolamine salts include the mono-, di-, tri-ethanolamine salts of pelargonic acid. The choline salts can be prepared by combining pelargonic acid with choline hydroxide to form choline pelargonate.

"Low Phytotoxicity" of pelargonic acid, as used herein means that the toxic effect on plants is absent or at such a level so as not to adversely impact the growth and/or yield of the plant under a given set of test conditions, e.g., at a given concentration of pelargonic acid.

Phytotoxic effects may be measured in a number of different ways, for example, according to the principals set out in OEPP/EPPO Bulletin (2014) 44(3), 265-273 "PP 1/135 (4) Phytotoxicity assessment".

The phytotoxic effect on plants may be assessed visually as a function of the percentage of discoloration to the leaves and/or the appearance of necrosis. When the pelargonic acid compositions are applied to the foliage of the useful plants in accordance with the teachings herein, will typically result in a level of phytotoxicity of less than 20%, preferably less than 15%, more preferably less than 10% necrosis of the leaves in comparison to untreated plants.

Preferred uses of the invention will typically result in phytotoxicity of 7% or less, whilst the most preferred uses will typically result in phytotoxicity of 5% or less. The above values are approximate as any purely visual assessment is likely to contain a degree of subjectivity.

As used herein the term "useful plants" includes Corn; Cotton; Cereals including wheat (winter and spring), spelt, durum, rye, barley, oats, millet and triticale; Oilseed rape as used herein includes *Brassica napus* subsp. napus, also referred to as Argentine canola, rapeseed or rape and the specific group of cultivars, canola; *Brassica rapa*, also known as Polish Canola and *Brassica juncea,* also known as brown mustard; Perennials as used herein includes Coffee, Fruit trees such as Abiu, Almond, Amla (Indian gooseberry), Apple, Apricot, Avocado, Bael, Ber (Indian plum), Carambola (starfruit), Cashew, Cherry, Citrus (clementine, lemon, lime, orange etc.), Coconut, Crab apple, Damson, Durian, Elderberry, Fig, Grapefruit, Guava, Jackfruit, Jujube, Loquat, Lychee, Mango, Medlar, Morello cherry, Mulberry, Olive, Pawpaw, both the tropical Carica papaya and the North American Asimina triloba, Peach and nectarine, Pear, Pecan, Persimmon, Plum, Pomelo, Quince, Pomegranate, Rambutan, Sapodilla (chikoo), Soursop, Sugar-apple (sharifa), Sweet chestnut, Tamarillo, Ugli fruit, Walnut and Water Apple; and Grapes; Rice; Sorghum, Soybean; Turfgrass; Vegetables including *Brassica oleracea* (e.g., cabbage, Brussels sprouts, cauliflower, broccoli, kale, kohlrabi, red cabbage, Savoy cabbage, Chinese broccoli, collard greens), *Brassica rapa* (e.g., turnip, Chinese cabbage, napa cabbage, bok choy), *Raphanus sativus* (e.g., radish, daikon, seedpod varieties), *Daucus carota* (e.g., carrot); *Pastinaca sativa* (e.g., parsnip), *Beta vulgaris* (e.g., beetroot, sea beet, Swiss chard, sugar beet), *Lactuca sativa* (e.g., lettuce, celtuce), *Aspargus officinalis* (e.g., asparagus), *Phaseolus vulgaris, Phaseolus coccineus* and *Phaseolus lunatus* (e.g., green bean, French bean, runner bean, haricot bean, Lima bean), *Vicia faba* (e.g., broad bean), *Pisum sativum* (e.g., pea, snap pea, snow pea, split pea), *Solanum tuberosum* (e.g., potato), *Solanum melongena* (e.g., eggplant), *Solanum lycopersicum* (e.g., tomato), *Cucumis sativus* (e.g., cucumber), *Cucurbita* spp. (e.g., pumpkin, squash, marrow, zucchini, gourd), *Allium cepa* (e.g., onion, spring onion, scallion, shallot), *Allium sativum* (e.g., garlic), *Allium ampeloprasum* (e.g., leek, elephant garlic), *Capsicum annuum* (e.g., pepper, bell pepper, sweet pepper), *Spinacia oleracea* (e.g., spinach), *Dioscorea* spp. (e.g., yam), *Ipomoea batatas* (e.g., sweet potato) and *Manihot esculenta* (e.g., cassava).

Plants and plant cultivars which are preferably treated according to the invention include those that are resistant against herbicides or one or more biotic stresses, i.e., said plants show a better defense against animal and microbial pests, such as against nematodes, insects, acari, phytopathogenic fungi, bacteria, viruses and/or viroids. This includes plants made resistant to the above biotic stress by way of breeding including mutagenesis, genetic modification through gene editing, e.g., CRISPR, or transformed by the use of recombinant DNA techniques (i.e., transgenic plants) such that that they are capable of synthesizing one or more selectively acting toxins, such as are known, for example, from toxin-producing bacteria, especially those of the genus Bacillus.

The compositions according to the invention can advantageously be used to treat transgenic plants, plant cultivars or plant parts that received genetic material which imparts advantageous and/or useful properties (traits) to these plants, plant cultivars or plant parts. Therefore, it is contemplated that the present invention may be combined with one or more recombinant traits or transgenic event(s) or a combination thereof.

For the purposes of this application, a transgenic event is created by the insertion of a specific recombinant DNA molecule into a specific position (locus) within the chromosome of the plant genome. The insertion creates a novel DNA sequence referred to as an "event" and is characterized by the inserted recombinant DNA molecule and some amount of genomic DNA immediately adjacent to/flanking both ends of the inserted DNA. Such trait(s) or transgenic event(s) include, but are not limited to, pest resistance, water use efficiency, yield performance, drought tolerance, seed quality, improved nutritional quality, hybrid seed production, and herbicide tolerance, in which the trait is measured with respect to a plant lacking such trait or transgenic event. Concrete examples of such advantageous and/or useful properties (traits) are better plant growth, vigor, stress tolerance, standability, lodging resistance, nutrient uptake, plant nutrition, and/or yield, in particular improved growth, increased tolerance to high or low temperatures, increased tolerance to drought or to levels of water or soil salinity, enhanced flowering performance, easier harvesting, accelerated ripening, higher yields, higher quality and/or a higher nutritional value of the harvested products, better storage life and/or processability of the harvested products, and increased resistance against animal and microbial pests, such as against insects, arachnids, nematodes, mites, slugs and snails.

Another and particularly emphasized example of such properties is conferred tolerance to one or more herbicides, for example imidazolinones, sulphonylureas, glyphosate or phosphinothricin by either mutagenesis, for example, Clearfield^{™} imidazolinone tolerant varieties, or transgenic techniques.

Further suitable herbicide tolerance traits include at least one ALS (acetolactate synthase) inhibitor.

Yet another example of such properties is resistance to one or more phytopathogenic fungi, for example Asian Soybean Rust

Further and particularly emphasized examples of such properties are increased resistance against bacteria and/or viruses owing, for example, to systemic acquired resistance (SAR), systemin, phytoalexins, elicitors and also resistance genes and correspondingly expressed proteins and toxins.

Crops may also be modified for enhanced resistance to fungal (for example *Fusarium*, *Anthracnose*, or *Phytophthora*), bacterial (for example *Pseudomonas*) or viral (for example potato leafroll virus, tomato spotted wilt virus, cucumber mosaic virus) pathogens.

Crops also include those that have enhanced resistance to nematodes, such as the soybean cyst nematode.

Particularly useful transgenic plants which may be treated according to the invention are plants containing transformation events, or combination of transformation events, that are listed for example in the databases from various national or regional regulatory agencies.

Plants and plant cultivars which may also be treated according to the invention are those plants which are resistant to one or more abiotic stresses, i.e., that already exhibit an increased plant health with respect to stress tolerance. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance. Preferably, the treatment of these plants and cultivars with the composition of the present invention additionally increases the overall plant health.

Plants and plant cultivars which may also be treated according to the invention, are those plants characterized by enhanced yield characteristics i.e., that already exhibit an increased plant health with respect to this feature. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content, protein content, oil content and composition, nutritional value, reduction in anti-nutritional compounds, improved processability and better storage stability. Preferably, the treatment of these plants and cultivars with the composition of the present invention additionally increases the overall plant health.

According to the present invention, a method of inducing defensive responses in useful plants to build up the plants' natural defense system against environmental stresses and pathogens is disclosed, wherein the method comprises applying an effective amount of pelargonic acid or its salt, ester or amide derivatives thereof, to a plant or to a locus of a plant.

Furthermore, a method of inducing defensive responses in useful plants to build up the plants' natural defense system against abiotic stresses selected from salinity, floods, drought, temperature extremes, heavy metals and radiation and biotic stresses selected from fungi, bacteria, oomycetes, nematodes, and herbivores is disclosed, wherein the method comprises applying an effective amount of pelargonic acid or its salts, esters or amides, or derivatives thereof, to a plant or to a locus of a plant.

According to the present invention, when pelargonic acid or it salts, esters or amides are applied to the useful plant, such plant demonstrates better defense against abiotic and/or biotic stresses.

Examples of the above-mentioned biotic stresses include insect attacks caused by: pests from the phylum of the *Arthropoda*, in particular from the class of the *Arachnida*, for example *Acarus* spp., for example *Acarus siro*, *Aceria kuko*, *Aceria sheldoni*, *Aculops* spp., *Aculus* spp., for example *Aculus fockeui*, *Aculus schlechtendali*, *Amblyomma* spp., *Amphitetranychus viennensis*, *Argas* spp., *Boophilus* spp., *Brevipalpus* spp., for example *Brevipalpus phoenicis*, *Bryobia graminum*, *Bryobia praetiosa*, *Centruroides* spp., *Chorioptes* spp., *Dermanyssus gallinae*, *Dermatophagoides pteronyssinus*, *Dermatophagoides farinae*, *Dermacentor* spp., *Eotetranychus* spp., for example *Eotetranychus hicoriae*, *Epitrimerus pyri*, *Eutetranychus* spp., for example *Eutetranychus banksi*, *Eriophyes* spp., for example *Eriophyes pyri, Glycyphagus domesticus, Halotydeus destructor*, *Hemitarsonemus* spp., for example *Hemitarsonemus latus* (=*Polyphagotarsonemus latus*), *Hyalomma* spp., *Ixodes* spp., *Latrodectus* spp., *Loxosceles* spp., *Neutrombicula autumnalis*, *Nuphersa* spp., *Oligonychus* spp., for example *Oligonychus coffeae*, *Oligonychus coniferarum*, *Oligonychus ilicis*, *Oligonychus indicus*, *Oligonychus mangiferus*, *Oligonychus pratensis*, *Oligonychus punicae*, *Oligonychus yothersi*, *Omithodorus* spp., *Omithonyssus* spp., *Panonychus* spp., for example *Panonychus citri* (=*Metatetranychus citri*), *Panonychus ulmi* (=*Metatetranychus ulmi*), *Phyllocoptruta oleivora*, *Platytetranychus multidigituli*, *Polyphagotarsonemus latus*, *Psoroptes* spp., *Rhipicephalus* spp., *Rhizoglyphus* spp., *Sarcoptes* spp., *Scorpio maurus*, *Steneotarsonemus* spp., *Steneotarsonemus spinki*, *Tarsonemus* spp., for example *Tarsonemus confusus*, *Tarsonemus pallidus*, *Tetranychus* spp., for example *Tetranychus canadensis*, *Tetranychus cinnabarinus*, *Tetranychus turkestani*, *Tetranychus urticae*, *Trombicula alfreddugesi*, *Vaejovis* spp., *Vasates lycopersici*;
from the class of the *Chilopoda*, for example *Geophilus* spp., *Scutigera* spp.;
from the order or the class of the *Collembola*, for example *Onychiurus armatus*; *Sminthurus viridis*;
from the class of the *Diplopoda*, for example *Blaniulus guttulatus*;
from the class of the *Insecta*, for example from the order of the *Blattodea*, for example *Blatta orientalis*, *Blattella asahinai*, *Blattella germanica*, *Leucophaea maderae*, *Loboptera decipiens*, *Neostylopyga rhombifolia*, *Panchlora* spp., *Parcoblatta* spp., *Periplaneta* spp., for example *Periplaneta americana*, *Periplaneta australasiae*, *Pycnoscelus surinamensis*, *Supella longipalpa*;
from the order of the Coleoptera, for example *Acalymma vittatum*, *Acanthoscelides obtectus*, *Adoretus* spp., *Aethina tumida*, *Agelastica alni*, *Agrilus* spp., for example *Agrilus planipennis*, *Agrilus coxalis*, *Agrilus bilineatus*, *Agrilus anxius*, *Agriotes* spp., for example *Agriotes linneatus*, *Agriotes mancus*, *Alphitobius diaperinus*, *Altica chalybea*, *Amphimallon solstitialis*, *Anobium punctatum*, *Anoplophora* spp., for example *Anoplophora glabripennis*, *Anthonomus* spp., for example *Anthonomus grandis* or *Anthonomus rubi*, *Anthrenus* spp., *Apion* spp., *Apogonia* spp., *Atomaria* spp., for example *Atomaria linearis*, *Attagenus* spp., *Baris caerulescens*, *Bruchidius obtectus*, *Bruchus* spp., for example *Bruchus pisorum, Bruchus rufimanus*, *Cassida* spp., *Cerotoma trifurcata*, *Ceutorrhynchus* spp., for example *Ceutorhynchus assimilis*, *Ceutorhynchus napi Gyll.*, *Ceutorhynchus obstrictus*, *Ceutorhynchus pallidactylus*, *Ceutorhynchus picitarsis*, *Ceutorhynchus quadridens*, *Ceutorhynchus rapae*, *Chaetocnema* spp., for example *Chaetocnema confmis*, *Chaetocnema denticulata*, *Chaetocnema ectypa*, *Chaetocnema pulicaria*, *Cleonus mendicus*, *Conoderus* spp., *Cosmopolites* spp., for example *Cosmopolites sordidus*, *Costelytra zealandica*, *Crioeris* spp., for example *Crioceris asparagi*, *Crioceris duodecimpunctata*, *Ctenicera* spp., *Curculio* spp., for example *Curculio caryae*, *Curculio caryatrypes*, *Curculio obtusus*, *Curculio sayi, Cryptolestes ferrugineus, Cryptolestes pusillus, Cryptorhynchus lapathi, Cryptorhynchus mangiferae, Cylindrocopturus* spp., *Cylindrocopturus adspersus, Cylindrocopturus fumissi, Dendroctonus* spp., for example *Dendroctonus ponderosae, Dermestes* spp., *Diabrotica* spp., for example *Diabrotica balteata, Diabrotica barberi, Diabrotica speciosa, Diabrotica undecimpunctata howardi, Diabrotica undecimpunctata undecimpunctata, Diabrotica virgifera* virgifera, *Diabrotica virgifera zeae, Dichocrocis* spp., *Dicladispa armigera, Diloboderus* spp., *Disonycha xanthomelas,* family *Elateridae, Epicaerus* spp., *Epicauta* spp., *Epilachna* spp., for example *Epilachna borealis, Epilachna varivestis, Epitrix* spp., for example *Epitrix cucumeris, Epitrix fuscula, Epitrix hirtipennis, Epitrix subcrinita, Epitrix tuberis, Faustinus* spp., *Gibbium psylloides, Gnathocerus comutus, Harmonia axyridis, Hellula undalis, Heteronychus arator, Heteronyx* spp., *Hylamorpha elegans, Hylotrupes bajulus, Hypera postica, Hypomeces squamosus, Hypothenemus* spp., for example *Hypothenemus hampei, Hypothenemus obscurus, Hypothenemus pubescens, Lachnostema consanguinea, Lasioderma serricome, Latheticus oryzae, Lathridius* spp., *Lema* spp., *Leptinotarsa decemlineata, Leucoptera* spp., for example *Leucoptera coffeella, Limonius ectypus, Lissorhoptrus oryzophilus, Listronotus* (= *Hyperodes*) spp., for example, *Listronotus oregonensis, Lixus* spp., *Luperodes* spp., *Luperomorpha xanthodera, Lyctus* spp., *Megacyllene* spp., for example *Megacyllene robiniae, Megascelis* spp., *Melanotus* spp., for example *Melanotus communis, Melanotus longulus oregonensis, Meligethes aeneus, Melolontha* spp., for example *Melolontha melolontha, Metriona bicolor, Migdolus* spp., *Monochamus* spp., *Naupactus xanthographus, Necrobia* spp., *Neogalerucella* spp., *Niptus hololeucus, Oryctes rhinoceros, Oryzaephilus surinamensis, Oryzaphagus oryzae, Otiorhynchus* spp., for example *Otiorhynchus cribricollis, Otiorhynchus ligustici, Otiorhynchus ovatus, Otiorhynchus rugosostriarus, Otiorhynchus sulcatus, Oulema* spp., for example *Oulema melanopus, Oulema oryzae, Oxycetonia jucunda, Phaedon cochleariae, Phyllophaga* spp., *Phyllophaga helleri, Phyllotreta* spp., for example *Phyllotreta armoraciae, Phyllotreta cruciferae, Phyllotreta pusilla, Phyllotreta ramosa, Phyllotreta striolata, Popillia japonica, Premnotrypes* spp., *Prostephanus truncatus, Psylliodes* spp., for example *Psylliodes affinis, Psylliodes chrysocephala, Psylliodes punctulata, Ptinus* spp., *Rhizobius ventralis, Rhizopertha dominica, Rhynchophorus* spp., *Rhynchophorus ferrugineus, Rhynchophorus palmarum,* family *Scarabaeidae, Scolytus* spp., for example *Scolytus multistriatus, Sinoxylonperforans, Sitophilus* spp., for example *Sitophilus granarius, Sitophilus linearis, Sitophilus oryzae, Sitophilus zeamais, Sphenophorus* spp., for example *Sphenophorous maidis, Stegobium paniceum, Stemechus* spp., for example *Stemechus paludatus, Symphyletes* spp., *Systena* spp., *Systena blanda, Tanymecus* spp., for example *Tanymecus dilaticollis, Tanymecus indicus, Tanymecus palliatus, Tenebrio molitor, Tenebrioides mauretanicus, Tribolium* spp., for example *Tribolium audax, Tribolium castaneum, Tribolium confusum, Trogoderma* spp., *Tychius* spp., *Xylotrechus* spp., *Zabrus* spp., for example *Zabrus tenebrioides*;
from the order of the *Dermaptera,* for example *Anisolabis maritime, Forficula auricularia, Labidura riparia*;
from the order of the *Diptera,* for example *Aedes* spp., for example *Aedes aegypti, Aedes albopictus, Aedes sticticus, Aedes vexans, Agromyza* spp., for example *Agromyza frontella, Agromyza oryzae, Agromyza parvicomis, Anastrepha* spp., for example *Anastrepha fraterculus, Anastrepha ludens, Anastrepha obliqua, Anopheles* spp., for example *Anopheles quadrimaculatus, Anopheles gambiae, Asphondylia* spp., *Bactrocera* spp., for example *Bactrocera correcta, Bactrocera cucurbitae, Bactrocera dorsalis, Bactrocera oleae, Bactrocera* tyroni, *Bactrocera* zonata, *Bibio hortulanus, Calliphora erythrocephala, Calliphora vicina, Ceratitis capitata, Chironomus* spp., *Chlorops oryzae, Chrysomya* spp., *Chrysops* spp., *Chrysozona pluvialis, Cochliomya* spp., *Contarinia* spp., for example *Contariniajohnsoni, Contarinia nasturtii, Contarinia pyrivora, Contarinia schulzi, Contarinia sorghicola, Contarinia tritici, Cordylobia anthropophaga,* Cricotopus *sylvestris, Culex* spp., for example *Culex pipiens, Culex quinquefasciatus, Culicoides* spp., *Culiseta* spp., *Cuterebra* spp., *Dacus oleae, Dasineura* spp., for example *Dasineura brassicae, Delia* spp., for example *Delia antiqua, Delia coarctata, Delia florilega, Delia platura, Delia radicum, Dermatobia hominis, Drosophila* spp., for example *Drosphila melanogaster, Drosophila suzukii, Echinocnemus* spp., *Euleia heraclei, Fannia* spp., *Gasterophilus* spp., *Glossina* spp., *Haematopota* spp., *Hydrellia* spp., *Hydrellia griseola, Hylemya* spp., *Hippobosca* spp., *Hypoderma* spp., *Liriomyza* spp., for example *Liriomyza brassicae, Liriomyza huidobrensis, Liriomyza sativae, Lucilia* spp., for example *Lucilia cuprina, Lutzomyia* spp., *Mansonia* spp., *Musca* spp., for example *Musca domestica, Musca domestica vicina, Oestrus* spp., *Ophiomyia simplex, Oscinella frit, Paratanytarsus* spp., *Paralauterbomiella subcincta, Pegomya* or *Pegomyia* spp., for example *Pegomya betae, Pegomya hyoscyami, Pegomya rubivora, Phlebotomus* spp., *Phorbia* spp., *Phormia* spp., *Phytomyza gymnostoma, Piophila casei, Platyparea poeciloptera, Prodiplosis* spp., *Psila rosae, Rhagoletis* spp., for example *Rhagoletis cingulata, Rhagoletis completa, Rhagoletis fausta, Rhagoletis indifferens, Rhagoletis mendax, Rhagoletis pomonella, Sarcophaga* spp., *Simulium* spp., for example *Simulium meridionale, Stomoxys* spp., *Tabanus* spp., *Tetanops* spp., *Tipula* spp., for example *Tipula paludosa, Tipula simplex, Toxotrypana curvicauda, Tritoxa flexa* and *Zonosemata electa.*
from the order of the *Hemiptera,* for example *Acizzia acaciaebaileyanae, Acizzia dodonaeae, Acizzia uncatoides, Acrida turrita, Acyrthosipon* spp., for example *Acyrthosiphon pisum, Acrogonia* spp., *Aeneolamia* spp., *Agonoscena* spp., *Aleurocanthus* spp., *Aleyrodes proletella, Aleurolobus barodensis, Aleurothrixus floccosus, Allocaridara malayensis, Amrasca* spp., for example *Amrasca bigutulla, Amrasca devastans, Anuraphis cardui, Aonidiella* spp., for example *Aonidiella aurantii, Aonidiella citrina, Aonidiella inomata, Aphanostigma piri, Aphis* spp., for example *Aphis citricola, Aphis craccivora, Aphis fabae, Aphis forbesi, Aphis glycines, Aphis gossypii, Aphis hederae, Aphis illinoisensis, Aphis middletoni, Aphis nasturtii, Aphis nerii, Aphis pomi, Aphis spiraecola, Aphis vibumiphila, Arboridia apicalis, Arytainilla* spp., *Aspidiella* spp., *Aspidiotus* spp., for example *Aspidiotus nerii, Atanus* spp., *Aulacorthum solani, Bemisia* spp., for example Bemisia *argentifolii, Bemisia tabaci, Blastopsylla occidentalis, Boreioglycaspis melaleucae, Brachycaudus helichrysi, Brachycolus* spp., *Brevicoryne brassicae, Cacopsylla* spp., for example Cacopsylla pyri, *Cacopsylla pyricola, Calligypona marginata, Capulinia* spp., *Cameocephala fulgida, Ceratovacuna lanigera, Cercopidae, Ceroplastes* spp., *Chaetosiphon fragaefolii, Chionaspis tegalensis, Chlorita onukii, Chondracris rosea, Chromaphis juglandicola, Chrysomphalus aonidum, Chrysomphalus ficus, Cicadulina mbila, Coccomytilus halli, Coccus* spp., for example *Coccus hesperidum,* Co*ccus longulus, Coccus pseudomagnoliarum, Coccus viridis, Cryptomyzus ribis, Cryptoneossa* spp., *Ctenarytaina* spp., *Daktulosphaira vitifoliae, Dalbulus* spp., *Dialeurodes chittendeni, Dialeurodes citri, Diaphorina citri, Diaspis* spp., *Diuraphis* spp., *Doralis* spp., *Draeculacephala* spp., *Drosicha* spp., *Dysaphis* spp., for example *Dysaphis apiifolia, Dysaphis plantaginea, Dysaphis tulipae, Dysmicoccus* spp., *Empoasca* spp., for example *Empoasca abrupta, Empoasca fabae, Empoasca maligna, Empoasca solana, Empoasca stevensi, Eriosoma* spp., for example *Eriosoma americanum, Eriosoma lanigerum, Eriosomapyricola, Erythroneura* spp., for example *Erythroneura vitis, Eucalyptolyma* spp., *Euphyllura* spp., for example *Euphyllura olivina, Euscelis bilobatus, Ferrisia* spp., *Fiorinia* spp., *Furcaspis oceanica, Geococcus coffeae, Glycaspis* spp., *Graphocephala versuta, Heteropsylla cubana, Heteropsylla spinulosa, Homalodisca vitripennis, Hyalopterus arundinis, Hyalopterus pruni, Icerya* spp., for example *Icerya purchasi, Idiocerus* spp., *Idioscopus* spp., *Laodelphax striatellus, Lecanium* spp., for example *Lecanium comi (=Parthenolecanium comi), Lepidosaphes* spp., for example *Lepidosaphes ulmi, Lipaphis erysimi, Lopholeucaspis japonica, Lycorma delicatula, Macrosiphum* spp., for example *Macrosiphum euphorbiae, Macrosiphum lilii, Macrosiphum rosae, Macrosteles facifrons, Mahanarva* spp., *Melanaphis sacchari, Metcalfiella* spp., *Metcalfa pruinosa, Metopolophium dirhodum, Monellia costalis, Monelliopsispecanis, Myzus* spp., for example *Myzus ascalonicus, Myzus cerasi, Myzus ligustri, Myzus omatus, Myzus persicae, Myzus nicotianae, Nasonovia ribisnigri, Neomaskellia* spp., *Nephotettix* spp., for example *Nephotettix cincticeps, Nephotettix nigropictus, Nephotettix virescens, Nettigoniclla spectra, Nilaparvata lugens, Oncometopia* spp., for example *Oncometopia orbona, Orthezia praelonga, Oxya chinensis, Pachypsylla* spp., *Parabemisia myricae, Paratrioza* spp., for example *Paratrioza cockerelli, Parlatoria* spp., for example *Parlatoria oleae, Pemphigus* spp., for example *Pemphigus bursarius, Pemphigus populivenae, Peregrinus maidis, Perkinsiella* spp., *Phenacoccus* spp., for example *Phenacoccus madeirensis, Philaenus spumarius, Phloeomyzus passerinii, Phorodon humuli, Phylloxera* spp., for example *Phylloxera devastatrix, Phylloxera notabilis, Pinnaspis aspidistrae, Planococcus* spp., for example *Planococcus citri, Prosopidopsylla flava, Protopulvinaria pyriformis, Pseudaulacaspis pentagona, Pseudococcus* spp., for example *Pseudococcus calceolariae, Pseudococcus comstocki, Pseudococcus longispinus, Pseudococcus maritimus, Pseudococcus vibumi, Psyllopsis* spp., *Psylla* spp., for example *Psylla buxi, Psylla mali, Psylla pyri, Pteromalus* spp., *Pulvinaria* spp., *Pyrilla* spp., *Quadraspidiotus* spp., for example *Quadraspidiotus juglansregiae, Quadraspidiotus ostreaeformis, Quadraspidiotus pemiciosus, Quesada gigas, Rastrococcus* spp., *Rhopalosiphum* spp., for example *Rhopalosiphum maidis, Rhopalosiphum oxyacanthae, Rhopalosiphum padi, Rhopalosiphum rufiabdominale, Saissetia* spp., for example *Saissetia coffeae, Saissetia miranda, Saissetia neglecta, Saissetia oleae, Scaphoideus titanus, Schizaphis graminum, Selenaspidus articulatus, Sipha flava, Sitobion avenae, Sogata* spp., *Sogatella furcifera, Sogatodes* spp., *Stictocephala festina, Siphoninus phillyreae, Tenalaphara malayensis,Tetragonocephela* spp., *Tinocallis caryaefoliae, Tomaspis* spp., *Toxoptera* spp., for example *Toxoptera aurantii, Toxoptera citricidus, Trialeurodes* spp., for example *Trialeurodes abutiloneus, Trialeurodes vaporariorum, Trioza* spp., for example *Trioza diospyri, Typhlocyba* spp., *Unaspis* spp., *Viteus vitifolii, Zygina* spp.;
from the suborder of the *Heteroptera,* for example *Aelia* spp., *Anasa tristis, Antestiopsis* spp., *Boisea* spp., *Blissus* spp., *Calocoris* spp., *Campylomma livida, Cavelerius* spp., *Chinavia hilaris, Cimex* spp., for example *Cimex adjunctus, Cimex hemipterus, Cimex lectularius, Cimexpilosellus, Collaria* spp., *Creontiades dilutus, Dasynus piper is, Dichelops* spp., for example *Dichelops furcatus, Dichelops melacantus, Diconocoris hewetti, Dysdercus* spp., *Euschistus* spp., for example *Euschistus heros, Euschistus servus, Euschistus tristigmus, Euschistus variolarius, Eurydema* spp., *Eurygaster* spp., *Halyomorpha halys, Heliopeltis* spp., *Horcias nobilellus, Leptocorisa* spp., *Leptocorisa varicomis, Leptoglossus occidentalis, Leptoglossus phyllopus, Lygocoris* spp., for example *Lygocoris pabulinus, Lygus* spp., for example *Lygus elisus, Lygus hesperus, Lygus lineolaris, Macropes excavatus, Megacopta cribraria, Miridae, Monalonion atratum, Nezara* spp., for example *Nezara viridula, Nysius* spp., *Oebalus* spp., *Oebalus pugnax,* family *Pentomidae, Piesma quadrata, Piezodorus* spp., for example *Piezodorus guildinii, Psallus* spp., *Pseudacysta persea, Rhodnius* spp., *Sahlbergella singularis, Scaptocoris castanea, Scotinophora* spp., *Stephanitis nashi, Tibraca* spp., *Triatoma* spp.;
from the order of the *Homoptera,* for example, *Acyrthosipon* spp., *Aeneolamia* spp., *Agonoscena* spp., *Aleurodes* spp., *Aleurolobus barodensis, Aleurothrixus* spp., family *Aleyrodidae, Amrasca* spp., *Anuraphis cardui, Aonidiella* spp., *Aphanostigma piri, Aphis* spp., *Arboridia apicalis, Aspidiella* spp., *Atanus* spp., *Aulacorthum solani, Brachycaudus helichrysii, Brachycolus* spp., *Brachycorynella asparagi, Brevicoryne brassicae, Calligypona marginata, Carneocephala fulgida, Ceratovacuna lanigera, Cercopidae, Ceroplastes* spp., *Chaetosiphon fragaefolu, Chionaspis tegalensis, Chlorita onukii, Chromaphis juglandicola, Chrysomphalus ficus, Cicadulina mbila, Coccomytilus halli, Coccus* spp., *Cryptomyzus ribis, Dialeurodes* spp., *Diaphorina* spp., *Diaspis* spp., *Doralis* spp., *Drosicha* spp., *Dysaphis* spp., *Dysmicoccus* spp., *Empoasca* spp., *Eriosoma* spp., *Euscelis bilobatus, Geococcus coffeae, Hyalopterus arundinis, leery a* spp., *Idiocerus* spp., *Idioscopus* spp., *Laodelphax striatellus, Lecanium* spp., *Lepidosaphes* spp., *Lipaphis erysimi, Macrosiphum* spp., *Macrosteles quadrilineatus, Mahanarva fimbriolata, Melanaphis sacchari, Metcalfiella* spp., *Metopolophium dirhodum, Monellia costalis, Monelliopsis pecanis, Myzus* spp., *Nasonovia ribisnigri, Orthezia praelonga, Parabemisia myricae, Paratrioza* spp., *Pemphigus* spp., *Peregrinus maidis, Phenacoccus* spp., *Phloeomyzus passerinii, Phorodon humuli, Phylloxera* spp., *Pinnaspis aspidistrae, Planococcus* spp., *Protopulvinaria pyriformis, Pseudaulacaspis pentagona, Pseudococcus* spp., *Psylla* spp., *Pteromalus* spp., *Pyrilla* spp., *Quadraspidiotus* spp., *Quesada gigas, Rastrococcus* spp., *Rhopalosiphum* spp., *Saissetia* spp., *Scaphoides titanus, Schizaphis graminum, Selenaspidus articulatus, Sogata* spp., *Sogatodes* spp., *Spissistilus* festinus, *Stictocephala festina, Tenalaphara malayensis, Tinocallis caryaefoliae, Tomaspis* spp., *Toxoptera* spp., *Trioza* spp., *Typhlocyba* spp., *Unaspis* spp., *Viteus vitifolii;*
from the order of the Hymenoptera, for example *Acromyrmex* spp., *Athalia* spp., for example *Athalia rosae, Atta* spp., *Camponotus* spp., *Dolichovespula* spp., *Diprion* spp., for example *Diprion similis, Hoplocampa* spp., for example *Hoplocampa cookei, Hoplocampa testudinea, Lasius* spp., *Linepithema* (*Iridiomyrmex*) *humile, Monomorium pharaonis, Paratrechina* spp., *Paravespula* spp., *Plagiolepis* spp., *Sirex* spp., for example *Sirex noctilio, Solenopsis invicta, Tapinoma* spp., *Technomyrmex albipes, Urocerus* spp., *Vespa* spp., for example *Vespa crabro, Wasmannia auropunctata, Xeris* spp.; from the order of the Isopoda, for example *Armadillidium vulgare, Oniscus asellus, Porcellio scaber*; from the order of the *Isoptera,* for example *Coptotermes* spp., for example *Coptotermes formosanus, Comitermes cumulans, Cryptotermes* spp., *Incisitermes* spp., *Kalotermes* spp., *Microtermes obesi, Nasutitermes* spp., *Odontotermes* spp., *Porotermes* spp., *Reticulitermes* spp., for example *Reticulitermesflavipes, Reticulitermes hesperus;*
from the order of the *Lepidoptera,* for example *Achroia grisella, Acronicta major, Adoxophyes* spp., for example *Adoxophyes orana, Aedia leucomelas, Agrotis* spp., for example *Agrotis c-nigrum, Agrotis ipsilon, Agrotis segetum, Alabama* spp., for example *Alabama argillacea, Amyelois transitella, Anarsia* spp., *Anticarsia* spp., for example *Anticarsia gemmatalis, Argyroploce* spp., *Autographa* spp., *Barathra brassicae, Blastodacna atra, Borbo cinnara, Bucculatrix thurberiella, Bupalus piniarius, Busseola* spp., *Cacoecia* spp., *Caloptilia theivora, Capua reticulana, Carpocapsa pomonella, Carposina niponensis, Cheimatobia brumata, Chilo* spp., for example *Chilo plejadellus, Chilo suppressalis, Choreutis pariana, Choristoneura* spp., *Chrysodeixis chalcites, Clysia ambiguella, Cnaphalocerus* spp., *Cnaphalocrocis medinalis, Cnephasia* spp., *Colias eurytheme, Conopomorpha* spp., *Conotrachelus* spp., *Copitarsia* spp., *Cydia* spp., for example *Cydia nigricana, Cydia pomonella, Dalaca noctuides, Diaphania* spp., *Diparopsis* spp., *Diatraea saccharalis, Dioryctria* spp., for example *Dioryctria zimmermani, Earias* spp., *Ecdytolopha aurantium, Elasmopalpus lignosellus, Eldana saccharina, Ephestia* spp., for example *Ephestia elutella, Ephestia kuehniella, Epinotia* spp., *Epiphyas postvittana, Erannis* spp., *Erschoviella musculana, Etiella* spp., *Eudocima* spp., *Eulia* spp., *Eupoecilia ambiguella, Euproctis* spp., for example *Euproctis chrysorrhoea, Euxoa* spp., *Euzophera semifuneralis, Evergestos rimosalis, Feltia* spp., *Galleria mellonella, Gracillaria* spp., *Grapholitha* spp., for example *Grapholita molesta, Grapholita prunivora, Hedylepta* spp., *Helicoverpa* spp., for example *Helicoverpa armigera, Helicoverpa zea, Heliothis* spp., for example *Heliothis virescens, Hoffnannophila pseudospretella, Homoeosoma* spp., *Homona* spp., *Hyponomeuta padella, Kakivoria flavofasciata, Lampides* spp., *Laphygma* spp., *Laspeyresia molesta, Leucinodes orbonalis, Leucoptera* spp., for example *Leucoptera coffeella, Lithocolletis* spp., for example *Lithocolletis blancardella, Lithophane antennata, Lobesia* spp., for example *Lobesia botrana, Loxagrotis albicosta, Lymantria* spp., for example *Lymantria dispar, Lyonetia* spp., for example *Lyonetia clerkella, Malacosoma neustria, Mamestra brassicae, Manduca* spp., for example, *Manduca sexta, Manduca quinquemaculata, Maruca testulalis, Melanitis leda, Melittia cucurbitae, Mocis* spp., *Monopis obviella, Mythimna separata, Nemapogon cloacellus,* family *Noctuidae, Nymphula* spp., *Oiketicus* spp., *Omphisa* spp., *Operophtera* spp., *Oria* spp., *Orthaga* spp., *Ostrinia* spp., for example *Ostrinia nubilalis, Panolis flammea, Pamara* spp., *Paralobesia viteana, Pectinophora* spp., for example *Pectinophora gossypiella, Peridroma saucia, Perileucoptera* spp., *Phthorimaea* spp., for example *Phthorimaea operculella, Phyllocnistis citrella, Phyllonorycter* spp., for example *Phyllonorycter blancardella, Phyllonorycter crataegella, Pieris* spp., for example *Pieris rapae, Plathypena scabra, Platynota stultana, Plodia interpunctella, Plusia* spp., *Plutella xylostella* (=*Plutella maculipennis*), *Podesia* spp., for example *Podesia syringae, Prays* spp., *Prodenia* spp., *Protoparce* spp., *Pseudaletia* spp., for example *Pseudaletia unipuncta, Pseudoplusia includens, Ptorimaea operculella, Pyrausta nubilalis, Rachiplusia nu, Schoenobius* spp., for example *Schoenobius bipunctifer, Scirpophaga* spp., for example *Scirpophaga innotata, Scirpophaga incertulas, Scotia segetum, Sesamia* spp., for example *Sesamia inferens, Sparganothis* spp., *Spodoptera* spp., for example *Spodoptera eradiana, Spodoptera exigua, Spodoptera frugiperda* and *Spodoptera praefica, Stathmopoda* spp., *Stenoma* spp., *Stomopteryx subsecivella, Striacosta albicosta, Synanthedon* spp., *Tecia solanivora, Thaumetopoea* spp., *Thermesia gemmatalis, Tinea cloacella, Tinea pellionella, Tineola bisselliella, Tortrix* spp., for example *Tortrix velutinana, Trichophaga tapetzella, Trichoplusia* spp., for example *Trichoplusia ni, Tryporyza incertulas, Tuta absoluta, Virachola* spp.;
from the order of the *Orthoptera* or *Saltatoria,* for example *Acheta domesticus, Dichroplus* spp., *Gryllotalpa* spp., for example *Gryllotalpa gryllotalpa, Hieroglyphus* spp., *Locusta* spp., for example *Locusta migratoria, Melanoplus* spp., for example *Melanoplus devastator, Melanoplus differentialis, Melanoplus femurrubrum, Paratlanticus ussuriensis, Schistocerca gregaria*;
from the order of the *Phthiraptera,* for example *Damalinia* spp., *Haematopinus* spp., *Linognathus* spp., *Pediculus* spp., *Phylloxera vastatrix, Phthirus pubis, Trichodectes* spp.;
from the order of the *Psocoptera,* for example *Lepinotus* spp., *Liposcelis* spp.;
from the order of the *Siphonaptera,* for example, *Ceratophyllus* spp., *Ctenocephalides* spp., for example *Ctenocephalides canis, Ctenocephalides felis, Pulex irritans, Tunga penetrans, Xenopsylla cheopis;*
from the order of the *Thysanoptera,* for example *Anaphothrips obscurus, Baliothrips biformis, Chaetanaphothrips leeuweni, Drepanothrips reuteri, Enneothrips flavens, Frankliniella* spp., for example *Frankliniella fusca, Frankliniella occidentalis, Frankliniella schultzei, Frankliniella tritici, Frankliniella vaccinii, Frankliniella williamsi, Haplothrips* spp., *Heliothrips* spp., *Hercinothrips femoralis, Kakothrips* spp., *Rhipiphorothrips cruentatus, Scirtothrips* spp., *Taeniothrips cardamomi, Thrips* spp., for example *Thrips palmi, Thrips tabaci*;
from the order of the *Zygentoma* (= *Thysanura*)*,* for example *Ctenolepisma* spp., *Fepisma saccharina, Fepismodes inquilinus, Thermobia domestica;*
from the class of the *Symphyla,* for example *Scutigerella* spp., for example *Scutigerella immaculata;*
pests from the phylum of the *Mollusca,* for example from the class of the *Bivalvia,* for example *Dreissena* spp., and also from the class of the *Gastropoda,* for example Arion spp., for example *Arion ater ruftis, Biomphalaria* spp., *Bulinus* spp., *Deroceras* spp., for example *Deroceras laeve, Galba* spp., *Fymnaea* spp., *Oncomelania* spp., *Pomacea* spp., *Succinea* spp.;
plant pests from the phylum of the *Nematoda,* i.e., phytoparasitic nematodes, in particular *Aglenchus* spp., for example *Aglenchus agricola, Anguina* spp., for example *Anguina tritici, Aphelenchoides* spp., for example *Aphelenchoides arachidis, Aphelenchoides fragariae, Belonolaimus* spp., for example *Belonolaimus gracilis, Belonolaimus longicaudatus, Belonolaimus nortoni, Bursaphelenchus* spp., for example *Bursaphelenchus cocophilus, Bursaphelenchus eremus, Bursaphelenchus xylophilus, Cacopaurus* spp., for example *Cacopaurus pestis, Criconemella* spp., for example *Criconemella curvata, Criconemella onoensis, Criconemella omata, Criconemella rusium, Criconemella xenoplax* (= *Mesocriconema xenoplax*), *Criconemoides* spp., for example *Criconemoides femiae, Criconemoides onoense, Criconemoides omatum, Ditylenchus* spp., for example *Ditylenchus dipsaci, Dolichodorus* spp., *Globodera* spp., for example *Globodera pallida, Globodera rostochiensis, Helicotylenchus* spp., for example *Helicotylenchus dihystera, Hemicriconemoides* spp., *Hemicycliophora* spp., *Heterodera* spp., for example *Heterodera avenae, Heterodera glycines, Heterodera schachtii, Hirschmaniella* spp., *Hoplolaimus* spp., *Longidorus* spp., for example *Longidorus africanus, Meloidogyne* spp., for example *Meloidogyne chitwoodi, Meloidogyne fallax, Meloidogyne hapla, Meloidogyne incognita, Meloinema* spp., *Nacobbus* spp., *Neotylenchus* spp., ., *Paralongidorus* spp., *Paraphelenchus* spp., *Paratrichodorus* spp., for example *Paratrichodorus minor, Paratylenchus* spp., *Pratylenchus* spp., for example *Pratylenchus penetrans, Pseudohalenchus* spp., *Psilenchus* spp., *Punctodera* spp., *Quinisulcius* spp., *Radopholus* spp., for example *Radopholus citrophilus, Radopholus similis, Rotylenchulus* spp., *Rotylenchus* spp., *Scutellonema* spp., *Subanguina* spp., *Trichodorus* spp., for example *Trichodorus obtusus, Trichodorus primitivus, Tylenchorhynchus* spp., for example *Tylenchorhynchus annulatus, Tylenchulus* spp., for example *Tylenchulus semipenetrans, Xiphinema* spp., for example *Xiphinema index.*

In one embodiment, the useful crops are Cereals and the plant pest comprises at least one member selected from the group consisting of *Diabrotica speciosa, Erthesina fullo, Sitobion avenae, Rhopalosiphum padi* and *Metopolophium dirhodum.*

In one embodiment, the useful crops are Corn and Sorghum and the plant pest comprises at least one member selected from the group consisting of *Oligonychus pratensis*; *Tetranychus urticae*; *Agriotes linneatus*; *Chaetocnema pulicaria*; *Diabrotica* spp., preferably *Diabrotica barberi, Diabrotica speciosa* or *Diabrotica virgifera* virgifera; *Melanotus communis*; *Sphenophorous maidis*; *Delia platura*; *Erthesina fullo*; *Rhopalosiphum* spp., preferably *Rhopalosiphum maidis* or *Rhopalosiphum padi*; *Dichelops melacantus*; *Agrotis ipsilon*; *Elasmopalpus lignosellus*; *Helicoverpa* spp., preferably *Helicoverpa armigera* or *Helicoverpa zea*; *Ostrinia nubilalis*; *Spodoptera frugiperda*; *Striacosta albicosta and Frankliniella* spp., preferably *Frankliniella occidentalis* and *Frankliniella williamsi.*

In one embodiment, the useful crop is Cotton and the plant pest comprises at least one member selected from the group consisting of *Tetranychus urticae, Anthonomus grandis*; *Diabrotica speciosa*; *Aphis* spp., preferably *Aphis craccivora* and *Aphis gossypii*; *Bemisia* spp., preferably Bemisia *argentifolii* and *Bemisia tabaci*; *Myzuspersicae*; *Trialeurodes* spp., preferably *Trialeurodes abutiloneus* and *Trialeurodes vaporariorum*; *Erthesina fullo*; *Euschistus heros*; *Helicoverpa armigera*; *Pectinophora gossypiella*; *Frankliniella* spp., preferably *Frankliniella fusca*, *Frankliniella occidentalis* and *Frankliniella tritici*; and *Thrips tabaci.*

In one embodiment, the useful crops are Oilseed rape and the plant pest comprises at least one member selected from the group consisting of *Ceutorhynchus* spp., preferably *Ceutorhynchus assimilis, Ceutorhynchus napi Gyll., Ceutorhynchus obstrictus, Ceutorhynchus pallidactylus, Ceutorhynchus picitarsis, Ceutorhynchus quadridens* or *Ceutorhynchus rapae*; *Diabrotica speciosa*; *Meligethes aeneus*; *Phyllotreta* spp.; *Psylliodes* spp., preferably *Psylliodes chrysocephala*; *Erthesina fullo* and *Myzus persicae.*

In one embodiment, the useful crops are Perennial crops and the plant pest comprises at least one member selected from the group consisting of *Panonychus ulmi, Tetranychus urticae*, *Altica chalybea, Diabrotica speciosa, Harmonia axyridis*, *Hypothenemus hampei, Leucoptera coffeella, Otiorhynchus* spp., preferably *Otiorhynchus cribricollis, Otiorhynchus sulcatus, Popillia japonica, Anastrepha* spp., for example *Anastrepha fraterculus, Anastrepha ludens, Anastrepha obliqua, Bactrocera* spp., for example *Bactrocera correcta, Bactrocera cucurbitae, Bactrocera dorsalis, Bactrocera oleae, Bactrocera* tyroni, *Bactrocera* zonata, *Drosophila suzukii, Aonidiella* spp., preferably *Aonidiella aurantii, Aonidiella citrina, Aonidiella inomata, Aspidiotus nerii, Cacopsylla* spp., preferably Cacopsylla pyri, *Cacopsylla pyricola, Daktulosphaira vitifoliae, Draeculacephala* spp., *Empoasca fabae, Erthesina fullo, Erythroneura vitis, Euphyllura olivina, Graphocephala versuta, Homalodisca vitripennis, Oncometopia orbona, Parlatoria oleae, Philaenus spumarius, Saissetia oleae, Scaphoideus titanus, Halyomorpha halys, Planococcus citri, Agrotis c-nigrum, Euzophera semifuneralis, Paralobesia viteana, Tortrix velutinana* and *Frankliniella occidentalis.*

In one embodiment, the useful crop is Coffee and the plant pest comprises at least one member selected from the group consisting of *Erthesina fullo, Hypothenemus hampei* and *Leucoptera coffeella.*

In one embodiment, the useful crops are Fruit trees and the plant pest comprises at least one member selected from the group consisting of *Otiorhynchus* spp., preferably *Otiorhynchus cribricollis, Otiorhynchus sulcatus, Anastrepha* spp., for example *Anastrepha fraterculus, Anastrepha ludens, Anastrepha obliqua, Bactrocera* spp., for example *Bactrocera correcta, Bactrocera cucurbitae, Bactrocera dorsalis, Bactrocera oleae, Bactrocera* tyroni, *Bactrocera* zonata, *Aonidiella* spp., preferably *Aonidiella aurantii, Aonidiella citrina, Aonidiella inomata, Aspidiotus nerii, Cacopsylla* spp., preferably Cacopsylla pyri, *Cacopsylla pyricola, Erthesina fullo, Euphyllura olivina, Graphocephala versuta, Parlatoria oleae, Philaenus spumarius, Saissetia oleae, Halyomorpha halys, Planococcus citri, Euzophera semifuneralis,* and *Frankliniella occidentalis.*

In one embodiment, the useful crops are Grapes and the plant pest comprises at least one member selected from the group consisting of *Panonychus ulmi, Tetranychus urticae, Altica chalybea, Diabrotica speciosa, Harmonia axyridis, Popillia japonica, Drosophila suzukii, Daktulosphaira vitifoliae, Draeculacephala* spp., *Empoasca fabae, Erthesina fullo, Erythroneura vitis, Graphocephala versuta, Homalodisca vitripennis, Oncometopia orbona, Philaenus spumarius, Scaphoideus titanus, Halyomorpha halys, Agrotis c-nigrum, Paralobesia viteana* and *Tortrix velutinana.*

In one embodiment, the useful crop is Rice and the plant pest comprises at least one member selected from the group consisting of *Diabrotica speciosa, Lissorhoptrus oryzophilus*; *Oulema oryzae*; *Agromyza oryzae*; *Chlorops oryzae*; *Erthesina fullo*; Nephotettix virescens; *Nilaparvata lugens*; *Sogatella furcifera*; *Oebalus pugnax*; *Chilo suppressalis*; *Cnaphalocrocis medinalis* and *Scirpophaga incertulas.*

In one embodiment, the useful crop is Soybean and the plant pest comprises at least one member selected from the group consisting of *Tetranychus urticae*; *Cerotoma trifurcata*; *Diabrotica speciosa*; *Popillia japonica*; *Aphis glycine*; *Erthesina fullo*; *Chinavia hilaris*; *Dichelops melacantus*; *Euschistus* spp., preferably *Euschistus heros* or *Euschistus servus*; *Nezara viridula*; *Piezodorus guildinii*; *Spissistilus* festinus; *Agrotis ipsilon*; *Anticarsia gemmatalis*; *Elasmopalpus lignosellus*; *Helicoverpa zea*; *Plathypena scabra*; *Pseudoplusia includens*; *Spodoptera frugiperda*; *Melanoplus* spp., preferably *Melanoplus differentialis or Melanoplus femurrubrum*; and *Heterodera glycines.*

In one embodiment, the useful crops are Vegetables and the plant pest comprises at least one member selected from the group consisting of *Tetranychus urticae, Acalymma vittatum, Cerotoma trifurcata, Crioceris asparagi, Crioceris duodecimpunctata, Diabrotica* spp., for example, *Diabrotica speciosa, Diabrotica undecimpunctata howardi, Disonycha xanthomelas,* family *Elateridae, Epicauta* spp., *Epilachna varivestis, Epitrix* spp., for example *Epitrix cucumeris, Epitrix fuscula, Leptinotarsa decemlineata, Listronotus oregonensis, Metriona bicolor, Phyllotreta cruciferae, Phyllotreta striolata,* family *Scarabaeidae, Systena* spp., *Systena blanda, Delia antiqua, Delia platura, Delia radicum, Liriomyza sativae, Ophiomyia simplex, Pegomya hyoscyami, Phytomyza gymnostoma, Tritoxa flexa, Acyrthosiphon pisum, Aphis* spp., for example, *Aphis fabae, Aphis gossypii, Brevicoryne brassicae, Empoasca fabae, Erthesina fullo, Lipaphis erysimi, Macrosiphum euphorbiae, Myzus persicae, Anasa tristis, Halyomorpha halys, Lygus lineolaris,* family *Pentomidae,* family *Aleyrodidae, Brachycorynella asparagi, Macrosteles quadrilineatus, Agrotis ipsilon, Colias eurytheme, Evergestos rimosalis, Helicoverpa zea, Manduca* spp., for example, *Manduca sexta, Manduca quinquemaculata, Melittia cucurbitae,* family *Noctuidae, Ostrinia nubilalis, Peridroma saucia, Pieris rapae, Plathypena scabra, Plutella xylostella (=Plutella maculipennis), Ptorimaea operculella, Spodoptera* spp., for example, *Spodoptera exigua, Spodoptera frugiperda, Trichoplusia ni, Tuta absoluta, Frankliniella tritici* and *Thrips tabaci.*

In one embodiment, the useful plant is selected from *Solanum lycopersicum,* preferably tomato, *Capsicum annuum,* preferably pepper, bell pepper and sweet pepper or *Solanum melongena,* preferably, eggplant, and the plant pest comprises at least one member selected from the group consisting of *Tetranychus urticae, Diabrotica speciosa, Epitrix cucumeris, Epitrix fuscula, Leptinotarsa decemlineata, Systena blanda, Erthesina fullo, Macrosiphum euphorbiae, Myzus persicae, Halyomorpha halys, Lygus lineolaris,* family *Pentomidae,* family *Aleyrodidae, Helicoverpa zea, Manduca sexta, Manduca quinquemaculata, Ostrinia nubilalis, Peridroma saucia, Spodoptera exigua, Spodoptera frugiperda* and *Tuta absoluta*; most preferably, the vegetable plant is tomato and the pest is selected from *Leptinotarsa decemlineata, Halyomorpha halys, Spodoptera exigua,* and *Tuta absoluta.*

In one embodiment, the useful plant is selected from *Phaseolus* spp., *Vicia faba* or *Pisum sativum* and the plant pest comprises at least one member selected from the group consisting of *Tetranychus urticae, Cerotoma trifurcata, Diabrotica speciosa, Epilachna varivestis, Delia platura, Acyrthosiphon pisum, Aphis fabae, Empoasca fabae, Erthesina fullo, Halyomorpha halys, Colias eurytheme, Helicoverpa zea, Ostrinia nubilalis* and *Plathypena scabra,* most preferably, the pest is selected from *Diabrotica speciosa, Acyrthosiphon pisum, Aphis fabae* and *Halyomorpha halys.*

In one embodiment, the useful plant is *Brassica oleracea* and the plant pest comprises at least one member selected from the group consisting of *Diabrotica speciosa, Phyllotreta cruciferae, Phyllotreta striolata, Delia radicum, Brevicoryne brassicae, Erthesina fullo, Lipaphis erysimi, Myzus persicae, Halyomorpha halys, Evergestos rimosalis, Pieris rapae, Plutella xylostella* (=*Plutella maculipennis*), *Spodoptera frugiperda, Trichoplusia ni, Frankliniella tritici* and *Thrips tabaci.*

In one embodiment, the useful plant is *Cucurbita* spp. and the plant pest comprises at least one member selected from the group consisting of *Tetranychus urticae, Acalymma vittatum, Diabrotica speciosa, Diabrotica undecimpunctata howardi, Aphis gossypii, Erthesina fullo, Anasa tristis, Melittia cucurbitae* and *Trichoplusia ni.*

In one embodiment, the useful plant is selected from *Ipomoea batatas,* preferably sweet potato, *Asparagus officinalis,* preferably asparagus, and *Allium cepa,* preferably, onion, and the plant pest comprises at least one member selected from the group consisting of *Crioceris Crioceris asparagi, Crioceris duodecimpunctata, Diabrotica speciosa, Diabrotica undecimpunctata howardi,* family *Elateridae, Metriona bicolor,* family *Scarabaeidae, Systena* spp., *Systena blanda, Delia antiqua, Erthesina fullo, Ophiomyia simplex, Phytomyza gymnostoma, Tritoxa flexa, Brachycorynella asparagi, Agrotis ipsilon,* family *Noctuidae* and *Thrips tabaci.*

In one embodiment, the useful plant is selected from *Spinacia oleracea,* preferably spinach, *Lactuca sativa,* preferably lettuce, and *Daucus carota,* preferably carrots, and the plant pest comprises at least one member selected from the group consisting of *Diabrotica speciosa, Diabrotica undecimpunctata howardi, Disonycha xanthomelas, Listronotus oregonensis, Systena blanda, Liriomyza sativae, Pegomya hyoscyami, Erthesina fullo, Myzus persicae, Lygus lineolaris, Macrosteles quadrilineatus, Helicoverpa zea,* family *Noctuidae, Spodoptera exigua,* and *Trichoplusia ni.*

In one embodiment, the useful plant is *Solanum tuberosum,* preferably potato, and the plant pest comprises at least one member selected from the group consisting of *Tetranychus urticae, Diabrotica speciosa,* family *Elateridae, Epicauta* spp., *Epitrix* spp., *Leptinotarsa decemlineata, Delia platura, Empoasca fabae, Erthesina fullo, Macrosiphum euphorbiae, Myzus persicae, Agrotis ipsilon, Manduca* spp. and *Ptorimaea operculella;* preferably, the pest is selected from *Diabrotica speciosa, Leptinotarsa decemlineata* and *Myzus persicae.*

Examples of the above-mentioned biotic stresses include diseases caused by pathogens of fungal diseases which can be treated in accordance with the invention and selected from: diseases caused by powdery mildew pathogens, for example *Blumeria* species, for example *Blumeria graminis*; *Podosphaera* species, for example *Podosphaera leucotricha; Sphaerotheca* species, for example *Sphaerotheca fuliginea*; *Uncinula* species, for example *Uncinula necator*; *Microsphaera* species, for example *Microsphaera diffusa*; *Leveillula* species, for example *Leveillula taurica*; *Erysiphe* species, for example *Erysiphe cichoracearunr*; diseases caused by rust disease pathogens, for example *Gymnosporangium* species, for example *Gymnosporangium sabinae*; *Hemileia* species, for example *Hemileia vastatrix*; *Phakopsora* species, for example *Phakopsora pachyrhizi* and *Phakopsora meibomiae*; *Puccinia* species, for example *Puccinia recondite, P. triticina, P. graminis* or *P. striiformis*; *Uromyces* species, for example *Uromyces appendiculatus;* diseases caused by pathogens from the group of the *Oomycetes*, for example *Albugo* species, for example *Albugo Candida*; *Bremia* species, for example *Bremia lactucae; Peronospora* species, for example *Peronosporapisi* or *P. brassicae*; *Phytophthora* species, for example *Phytophthora infestans*; *Plasmopara* species, for example *Plasmopara vilicola*; *Pseudoperonospora* species, for example *Pseudoperonospora humuli* or *Pseudoperonospora cubensis*; *Pythium* species, for example *Pythium ultimum*; leaf blotch diseases and leaf wilt diseases caused, for example, by *Alternaria* species, for example *Alternaria solani*; *Cercospora* species, for example *Cercospora beticola*; *Cladosporium* species, for example *Cladosporium cucumerinum*; *Cochliobolus* species, for example *Cochliobolus sativus* (conidia form: *Drechslera,* Syn: *Helminthosporium*), *Cochliobolus miyabeanus*; *Colletotrichum* species, for example *Colletotrichum lindemuthanium*; *Cycloconium* species, for example *Cycloconium oleaginum*; *Diaporthe* species, for example *Diaporthe citri*; *Elsinoe* species, for example *Elsinoefawcettii*; *Gloeosporium* species, for example *Gloeosporium laeticolor; Glomerella* species, for example *Glomerella cingulata*; *Guignardia* species, for example *Guignardia bidwelli*; *Leptosphaeria* species, for example *Leptosphaeria maculans*, *Leptosphaeria nodorum*; *Magnaporthe* species, for example *Magnaporthe grisea*; *Marssonia* species, for example *Marssonia coronaria*; *Microdochium* species, for example *Microdochium nivale*; *Mycosphaerella* species, for example *Mycosphaerella graminicola, M. arachidicola* and *M. fijiensis*; *Phaeosphaeria* species, for example Phaeosphaeria *nodorum*; *Pyrenophora* species, for example *Pyrenophora teres*, *Pyrenophora tritici repentis*; *Ramularia* species, for example *Ramularia collo-cygni*, *Ramularia areola*; *Rhynchosporium* species, for example *Rhynchosporium secalis*; *Septoria* species, for example *Septoria apii*, *Septoria lycopersii*; *Typhula* species, for example *Typhula incarnata*; *Venturia* species, for example *Venturia inaequalis*; *Zymoseptoria* species, for example, *Zymoseptoria tritici*; root and stem diseases caused, for example, by *Corticium* species, for example *Corticium graminearum*; *Fusarium* species, for example *Fusarium oxysporum*; *Gaeumannomyces* species, for example *Gaeumannomyces graminis*; *Rhizoctonia* species, such as, for example *Rhizoctonia solani*; *Sarocladium* diseases caused for example by *Sarocladium oryzae*; *Sclerotium* diseases caused for example by *Sclerotium oryzae*; *Tapesia* species, for example *Tapesia acuformis*; *Thielaviopsis* species, for example *Thielaviopsis basicola*; ear and panicle diseases (including corn cobs) caused, for example, by *Alternaria* species, for example *Alternaria* spp.; *Aspergillus* species, for example *Aspergillus flavus*; *Cladosporium* species, for example *Cladosporium cladosporioides*; *Claviceps* species, for example *Claviceps purpurea*; *Fusarium* species, for example *Fusarium culmorum*; *Gibberella* species, for example *Gibberella zeae*; *Monographella* species, for example *Monographella nivalis*; *Septoria* species, for example *Septoria nodorum*; diseases caused by smut fungi, for example *Sphacelotheca* species, for example *Sphacelotheca reiliana*; *Tilletia* species, for example *Tilletia caries, T. controversy*; *Urocystis* species, for example *Urocystis occulta*; *Ustilago* species, for example Ustilago *nuda*, *U. nuda tritici*; fruit rot caused, for example, by *Aspergillus* species, for example *Aspergillus flavus*; *Botrytis* species, for example *Botrytis cinerea*; *Penicillium* species, for example *Penicillium expansum* and *P. purpurogenum*; *Sderotinia* species, for example *Sclerotinia sclerotiorum; Verticilium* species, for example *Verticilium alboatrum*; seed and soilborne decay, mold, wilt, rot and damping-off diseases caused, for example, by *Alternaria* species, caused for example by *Alternaria brassicicola*; *Aphanomyces* species, caused for example by *Aphanomyces euteiches*; *Ascochyta* species, caused for example by *Ascochyta lentis*; *Aspergillus* species, caused for example by *Aspergillus flavus*; *Cladosporium* species, caused for example by *Cladosporium herbarum*; *Cochliobolus* species, caused for example by *Cochliobolus sativus*; (Conidiaform: *Drechslera*, *Bipolaris* Syn: *Helminthosporium*); *Colletotrichum* species, caused for example by *Colletotrichum coccodes*; *Fusarium* species, caused for example by *Fusarium culmorum*; *Gibberella* species, caused for example by *Gibberella zeae*; *Macrophomina* species, caused for example by *Macrophomina phaseolina*; *Monographella* species, caused for example by *Monographella nivalis*; *Penicillium* species, caused for example by *Penicillium expansum*; *Phaeoisariopsis* species, caused for example by *Phaeoisariopsis griseola*; *Phoma* species, caused for example by *Phoma lingam*; *Phomopsis* species, caused for example by *Phomopsis sojae*; *Phytophthora* species, caused for example by *Phytophthora cactorum*; *Pyrenophora* species, caused for example by *Pyrenophora graminea*; *Pyricularia* species, caused for example by *Pyricularia oryzae; Pythium* species, caused for example by *Pythium ultimum*; *Rhizoctonia* species, caused for example by *Rhizoctonia solani*; *Rhizopus* species, caused for example by *Rhizopus oryzae*; *Sclerotium* species, caused for example by *Sclerotium rolfsii*; *Septoria* species, caused for example by *Septoria nodorum*; *Typhula* species, caused for example by *Typhula incarnata*; *Verticillium* species, caused for example by *Verticillium dahliae;* cancers, galls and witches' broom caused, for example, by *Nectria* species, for example *Nectria galligena*; wilt diseases caused, for example, by *Monilinia* species, for example *Monilinia laxa*; leaf blister or leaf curl diseases caused, for example, by *Exobasidium* species, for example *Exobasidium vexans*; *Taphrina* species, for example *Taphrina deformans*; decline diseases of wooden plants caused, for example, by *Esca* disease, caused for example by *Phaemoniella damydospora, Phaeoacremonium aleophilum* and *Fomitiporia mediterranea*; *Eutypa* dyeback, caused for example by *Eutypa lata*; *Ganoderma* diseases caused for example by *Ganoderma boninense*; *Rigidoporus* diseases caused for example by *Rigidoporus lignosus*; diseases of flowers and seeds caused, for example, by *Botrytis* species, for example *Botrytis cinerea*; diseases of plant tubers caused, for example, by *Rhizoctonia* species, for example *Rhizoctonia solani;* Helminthosporium species, for example *Helminthosporium solani*; Club root caused, for example, by *Plasmodiophora* species, for example *Plamodiophora brassicae*;

The following diseases of soybeans can be controlled with elicitors according to the present invention, with preference: Fungal diseases on leaves, stems, pods and seeds caused, for example, by *Altemaria* leaf spot (*Altemaria specatrans tenuissima*), *Anthracnose* (*Colletotrichum gloeosporoides dematium* var. *truncatum*), brown spot (*Septoria glycines*), *Cercospora* leaf spot and blight (*Cercospora kikuchii*), *Choanephora* leaf blight (*Choanephora infundibulifera trispora* (Syn.)), *Dactuliophora* leaf spot (*Dactuliophora glycines*), downy mildew (*Peronospora manshurica*), *Drechslera* blight (*Drechslera glycini*), frogeye leaf spot (*Cercospora sojina*), *Leptosphaerulina* leaf spot (*Leptosphaerulina trifolii*), *Phyllostica* leaf spot (*Phyllosticta sojaecola*), pod and stem blight (*Phomopsis sojae*), powdery mildew (*Microsphaera diffusa*), *Pyrenochaeta* leaf spot (*Pyrenochaeta glycines*), *Rhizoctonia* aerial, foliage, and web blight (*Rhizoctonia solani*), rust (*Phakopsora pachyrhizi*, *Phakopsora meibomiae*), scab (*Sphaceloma glycines*), *Stemphylium* leaf blight (*Stemphylium botryosum*), target spot (*Corynespora cassiicola*).

Fungal diseases on roots and the stem base caused, for example, by black root rot (*Calonectria crotalariae*), charcoal rot (*Macrophomina phaseolina*), *Fusarium* blight or wilt, root rot, and pod and collar rot (*Fusarium oxysporum*, *Fusarium orthoceras*, *Fusarium semitectum, Fusarium equiseti*), *Mycoleptodiscus* root rot (*Mycoleptodiscus terrestris*), *Neocosmospora* (*Neocosmospora vasinfecta*), pod and stem blight (*Diaporthe phaseolorum*), stem canker (*Diaporthe phaseolorum* var. *caulivora*), *Phytophthora* rot *(Phytophthora megasperma*), brown stem rot (*Phialophora gregata*), *Pythium* rot (*Pythium aphanidermatum, Pythium irregulare, Pythium debaryanum, Pythium myriotylum, Pythium ultimum*),*Rhizoctonia* root rot, stem decay, and damping-off (*Rhizoctonia solani*), Sclerotinia stem decay (Sclerotinia sclerotiorum), *Sclerotinia* southern blight (*Sclerotinia rolfsii*), *Thielaviopsis* root rot (*Thielaviopsis basicola*).

In a particular preferred embodiment diseases of plants or crops that can be controlled by the method according to the invention include, for example, *Corynespora cassiicola* and *Phakopsora pachyrhizi* on soybean, *Phaeoisariopsis griseola* on cotton, *Leptosphaeria maculans* on oil seed rape, *Phytophtora* on potato, *Puccina* species, *Venturia inaequalis* on apple and *Zymoseptoria tritici* on wheat.

The methods according to the invention are particularly suitable for controlling diseases on cereals, in particular on wheat or barley: *Mycosphaerella* species, for example *Mycosphaerella graminicola* (synonym *Septoria tritici*), Puccinia species, for example *Puccinia recondite, P. triticina, P. graminis* or *P. striiformis*; *Leptosphaeria* species, for example *Leptosphaeria nodorum; Pyrenophora* species, for example *Pyrenophora* teres, *Pyrenophora tritici repentis, Pyrenophora graminea; Ramularia* species, for example *Ramularia collocygni, Gaeumannomyces* species, for example *Gaeumannomyces graminis; Fusarium* species, for example *Fusarium culmorum; Gibberella* species, for example *Gibberella zeae; Monographella* species, for example *Monographella nivalis; Septoria* species, for example *Septoria nodorum; Cochliobolus* species, caused for example by *Cochliobolus sativus*; (Conidiaform: *Drechslera, Bipolaris* Syn: *Helminthosporium*) *Rhynchosporium* species, for example *Rhynchosporium secalis.*

According to the present invention, when pelargonic acid or it salts, esters or amides are applied to the useful plant, such plant demonstrates better defense against abiotic stresses such as drought stress and flooding.

The compositions of the present invention comprise pelargonic acid, optionally including derivatives thereof, a liquid or solid carrier and, optionally, one or more customary formulation auxiliaries, which may be liquid or solid, for example surfactants, antifoams, for example silicone oil, preservatives, clays, inorganic compounds, viscosity regulators, binders and/or tackifiers. The composition may also further comprise a fertilizer, a micronutrient donor or other preparations which influence the growth of plants.

In a preferred embodiment, the pelargonic acid compositions are foliarly applied to the useful plants. Examples of foliar formulation types for pre-mix compositions are GR: Granules; WP: wettable powders; WG: water dispersable granules (powders); SG: water soluble granules; SL: soluble concentrates; EC: emulsifiable concentrate; EW: emulsions, oil in water; ME: micro-emulsion; SC: aqueous suspension concentrate; CS: aqueous capsule suspension; OD: oil-based suspension concentrate, and SE: aqueous suspo-emulsion. The type of pelargonic acid composition is to be selected to suit the intended aims and the prevailing circumstances.

The formulation components that are suitable for the preparation of the compositions according to the invention are known per se.

As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylene carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, α,α-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethylhexanol, ethylene carbonate, 1,1,1-trichloroethane, 2-heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, n-hexane, n-octylamine, octadecanoic acid, octylamine acetate, oleic acid, oleylamine, o-xylene, phenol, polyethylene glycol, propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and alcohols of higher molecular weight, such as amyl alcohol, tetrahydrofurfuryl alcohol, hexanol, octanol, ethylene glycol, propylene glycol, glycerol, N-methyl-2-pyrrolidone and the like.

Suitable solid carriers are, for example, talc, titanium dioxide, pyrophyllite clay, silica, attapulgite clay, kieselguhr, limestone, calcium carbonate, bentonite, calcium montmorillonite, cottonseed husks, wheat flour, soybean flour, pumice, wood flour, ground walnut shells, lignin and similar substances.

A large number of surfactants can advantageously be used in both liquid and solid formulations, especially in those formulations which can be diluted with a carrier prior to use. Surfactants may be anionic, cationic, non-ionic or polymeric and they can be used as emulsifiers, wetting agents or suspending agents or for other purposes. Typical surfactants include, for example, salts of alkyl sulfates, such as diethanolammonium lauryl sulfate; salts of alkylarylsulfonates, such as calcium dodecylbenzenesulfonate; alkylphenol/alkylene oxide addition products, such as nonylphenol ethoxylate; alcohol/alkylene oxide addition products, such as tridecylalcohol ethoxylate; siloxanes, silicones, silanes, silicates and siliconates; soaps, such as sodium stearate; salts of alkylnaphthalenesulfonates, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryltrimethylammonium chloride, polyethylene glycol esters of fatty acids, such as polyethylene glycol stearate; block copolymers of ethylene oxide and propylene oxide; and salts of mono- and di-alkylphosphate esters; esters of stearate and also further substances described e.g. in McCutcheon's Detergents and Emulsifiers Annual, MC Publishing Corp., Ridgewood New Jersey (1981).

The compositions according to the invention can include an additive comprising an oil of vegetable or animal origin, a mineral oil, alkyl esters of such oils or mixtures of such oils and oil derivatives. The amount of oil additive, when present, in the composition according to the invention is generally from 0.01 to 10%, based on the mixture to be applied. For example, the oil additive can be added to a spray tank in the desired concentration after a spray mixture has been prepared. Preferred oil additives comprise mineral oils or an oil of vegetable origin, for example rapeseed oil, olive oil or sunflower oil, emulsified vegetable oil, alkyl esters of oils of vegetable origin, for example the methyl derivatives, or an oil of animal origin, such as fish oil or beef tallow. Preferred oil additives comprise alkyl esters of C₈-C₂₂ fatty acids, especially the methyl derivatives of C₁₂-C₁₈ fatty acids, for example the methyl esters of lauric acid, palmitic acid and oleic acid (methyl laurate, methyl palmitate and methyl oleate, respectively). Many oil derivatives are known from the Compendium of Herbicide Adjuvants, 10th Edition, Southern Illinois University, 2010.

Other embodiments of the present invention include applying the pelargonic acid compositions to a seed of a useful plant, seeds treated with pelargonic acid compositions and the methods according to the present invention, which comprise applying to a seed a pelargonic acid composition.

The term "seed treatment" generally refers to application of a material to a seed prior to or during the time it is planted in soil to improve the handling characteristics of the seed, protect the seed prior to germination, support the germination and/or support the growth of the resulting plant. Some seed treatments are employed solely for the purpose of improving the handling characteristics or other physical characteristics of seeds, and include no agricultural active ingredients. Other seed treatments bind one or more active ingredients to seeds for various beneficial purposes. For example, seed treatments that include one or more active ingredients are commonly used to ensure uniform stand establishment by protecting against soilborne diseases and insects. Typical examples include the application of pesticides such as fungicides, insecticides and plant growth regulators. Systemic seed treatments may eliminate, or at least reduce the need for, traditional broadcast sprays of foliar fungicides or insecticides for certain early season airborne diseases and insects.

The seed treatment mixture can also comprise or may be applied together and/or sequentially with further active compounds. These further compounds can be fertilizers or micronutrient donors or other preparations that influence plant growth, such as inoculants.

According to the present invention pelargonic acid, or derivatives thereof, is applied to seeds of the useful plants in an amount of from 0.3 grams of pelargonic acid/ton of seeds (g/t) to 100 g/t, preferably from 0.3 to 80 g/t.

As with the nature of the formulations, the methods of application, such as foliar, drench, spraying, atomizing, dusting, scattering, coating or pouring, are chosen in accordance with the intended objectives and the prevailing circumstances.

Whereas commercial products will preferably be formulated as concentrates (e.g., pre-mix or ready-mix compositions), the end user will normally employ dilute formulations (e.g., spray mix, spray tank or tank-mix (when combined with other pesticides or formulation auxiliaries) compositions).

Generally, the pre-mix compositions comprise 0.1 to 99%, especially 15 to 90%, of pelargonic acid, or derivatives thereof, and 0 to 99.9% of at least one liquid or solid carrier, and 0 to 35%, especially 0.1 to 20%, of the composition to be formulation auxiliaries., e.g., surfactants (% in each case meaning percent by weight in the pre-mix composition).

Generally, a spray mix or spray tank formulation for foliar or soil application comprises 0.05 to 20%, especially 0.1 to 15 %, of pelargonic acid, or derivatives thereof, and 99.95 to 80 %, especially 99.9 to 85 %, of a liquid carrier, and 0 to 20 %, especially 0.1 to 15 %, of formulation auxiliaries, e.g., surfactants (% in each case meaning percent by weight in the tank-mix composition).

The pelargonic acid, or derivative thereof, is applied in an effective amount to achieve the desired defensive or elicitor response. The rates of application (grams of pelargonic acid/hectare or g/ha) vary and depend on the method of application, the crop plant, the defensive or elicitor response desired, the prevailing climatic conditions, and other factors governed by the method of application, the time of application and the target crop.

When the environmental stress is fungal, the pelargonic acid is applied in a fungicidally effective amount. As used herein, term "fungicidally effective amount" means the amount that is effective to inhibit or control fungus growth rate, increase mortality, or eradicate the fungus when the fungicidal composition is applied to the useful plant. Effective rates for inducing the plant's defenses against fungal pathogens include from 0.3 to 100 g/ha, preferably from 0.3 to 50 g/ha, more preferably from. 0.3 to 10 g/ha.

When the environmental stress is an insect pest, the pelargonic acid is applied in an insecticidally effective amount. As used herein, term "insecticidally effective amount" means the amount that is effective to repel insects, inhibit or control insect growth rate, increase mortality, or eradicate the insects when the insecticidal composition is applied to the useful plant. Effective rates for inducing the plant's defenses against insect pests include from 1 to 2,600 g/ha, preferably from 50 to 1,300 g/ha, more preferably 150 to 650 g/ha.

When a biostimulant response is desired, the pelargonic acid is applied in a biostimulant effective amount. As used herein, term "biostimulant effective amount" means the amount that is effective to enhance nutrition efficiency, abiotic stress tolerance and/or crop quality traits, regardless of its nutrients content, when the biostimulant composition is applied to useful plant. Effective rates to elicit a biostimulant effect include from 1 to 2,600 g/ha, preferably from 50 to 1,300 g/ha, more preferably 150 to 650 g/ha.

In one embodiment, the pelargonic acid, or compositions thereof, is applied to the useful plant when the pests (e.g., insects or fungal) are not present or are not present in an amount sufficient to cause damage to the plant or significantly impact quality or yield.

In one embodiment, the pelargonic acid, or compositions thereof, provides an indirect control of the pests or an indirect biostimulant effect by inducing the plant's natural defense system against the environmental stresses and pathogens.

For foliar application, sprayable mixtures of the pelargonic acid compositions may be prepared at a concentration that, when applied at a given spray rate, delivers pelargonic acid to the plants in an amount of from 1 to 2,600 g/ha, preferably 50 to 1,300 g/ha, more preferably 150 to 650 g/ha.

For example, the pelargonic acid composition may be applied at a dilution containing pelargonic acid, or derivatives thereof, at less than about 2,600 g/ha, preferably less than about 1,300 g/ha, most preferably about 650 g/ha. In preferred aspects, the compositions of the present proposals are provided and applied at a dilution containing the pelargonic acid, or derivatives thereof, at between 1 to 2,600 g/ha, preferably 50 to 1,300 g/ha, more preferably 150 to 650 g/ha.

For foliar application, where activating the plant's defenses against fungal pathogens is desired, sprayable mixtures of the pelargonic acid compositions may be prepared at a concentration that, when applied at a given spray rate, delivers pelargonic acid to the plants in an amount of from 0.3 to 100 g/ha, preferably from 0.3 to 50 g/ha, more preferably from. 0.3 to 10 g/ha.

For example, where activating the plant's defenses against fungal pathogens is desired, the pelargonic acid composition may be applied at a dilution containing pelargonic acid, or derivatives thereof, at less than about 100 g/ha, preferably less than about 50 g/ha, most preferably about 10 g/ha. In preferred aspects, the compositions of the present proposals are provided and applied at a dilution containing the pelargonic acid, or derivatives thereof, at between 0.3 to 100 g/ha, preferably from 0.3 to 50 g/ha, more preferably from. 0.3 to 10 g/ha.

The present compositions have been demonstrated to have low phytotoxicity, e.g., exhibiting zero or acceptable leaf scorching, at rates of the present invention.

Methods of using the present compositions for inducing defensive responses in plants against abiotic and biotic stresses on useful plants are also part of the present invention. For example, the compositions are preferably used at a dilution, e.g., those dilutions preferred above, to provide effective response inducing properties coupled with low phytotoxicity.

The activity of the compositions according to the invention can be broadened considerably, and adapted to prevailing circumstances, by adding additional pesticidally active agents to the pelargonic acid compositions. Compositions comprising combinations of (A) pelargonic acid, or derivatives thereof, and (B) at least one additional pesticidally active agent (i.e., other than pelargonic acid) may also have further surprising advantages which can also be described, in a wider sense, as super-additive ("synergistic") effects. Thus, for example, by using or employing inventive composition in the treatment according to the invention, reduced application rates and/or a widening of the activity spectrum and/or an increase in the activity better plant growth, increased tolerance to high or low temperatures, increased tolerance to drought or to water or soil salt content, increased flowering performance, easier harvesting, accelerated maturation, higher harvest yields, bigger fruits, larger plant height, greener leaf color, earlier flowering, higher quality and/or a higher nutritional value of the harvested products, higher sugar concentration within the fruits, better storage stability and/or processability of the harvested products are possible, which exceed the effects which were actually to be expected.

According to the invention, the expression "combination" stands for the various combinations of (A) pelargonic acid, or derivatives thereof, and (B) the at least one pesticidally active agent, for example in a single "ready-mix" or "pre-mix" form, in a combined spray mixture composed from separate formulations of the single active compounds, such as a "tank-mix", and in a combined use of the single active ingredients when applied in a sequential manner, i.e., one after the other within a reasonably short period, such as a few hours or days, e.g.; 2 hours to 7 days. Preferably, the order of applying the pelargonic acid, or derivatives thereof, and the at least one pesticidally active agent is not essential for working the present invention. Accordingly, the term "combination" also encompasses the presence of pelargonic acid composition and the at least one pesticidally active agent on a plant that has been treated.

The ratio of (A) pelargonic acid and (B) any additional pesticidally active agents is selected such that, when applied to the useful plants, the pelargonic acid and the pesticidally active agents are delivered at their respective desired rates, e.g., as taught on a product label or as can be determined by one experienced in the field, required for pest control. Because the application rates for the additional pesticidally active agents can vary greatly from one another, the general ratios of pelargonic acid to the additional active agent also can vary greatly. The compositions comprising mixtures of pelargonic acid with additional pesticidally active agents described above comprise pelargonic acid and an active agent as described above preferably in a mixing ratio of from 1000:1 to 1:1, preferably in a weight ratio of 700:1 to 10:1, more preferably in a weight ratio of 500:1 to 30:1, and most preferably in a weight ratio of 100:1 to 1:100.

Suitable additional pesticidally active agents here are, for example, representatives of the following classes of active ingredients:
(1) Acetylcholinesterase (AChE) inhibitors,
(2) GABA-gated chloride channel blockers,
(3) Sodium channel modulators,
(4) Nicotinic acetylcholine receptor (nAChR) competitive modulators, (5) Nicotinic acetylcholine receptor (nAChR) allosteric modulators,
(6) Glutamate-gated chloride channel (GluCl) allosteric modulators,
(7) Juvenile hormone mimics,
(8) Miscellaneous non-specific (multi-site) inhibitors,
(9) Chordotonal organ TRPV channel modulators,
(10) Mite growth inhibitors,
(11) Microbial disrupters of the insect gut membrane,
(12) Inhibitors of mitochondrial ATP synthase,
(13) Uncouplers of oxidative phosphorylation via disruption of the proton gradient,
(14) Nicotinic acetylcholine receptor channel blockers
(15) Inhibitors of chitin biosynthesis, type 0
(16) Inhibitors of chitin biosynthesis, type 1
(17) Moulting disrupters
(18) Ecdysone receptor agonists
(19) Octopamine receptor agonists
(20) Mitochondrial complex III electron transport inhibitors
(21) Mitochondrial complex I electron transport inhibitors
(22) Voltage-dependent sodium channel blockers
(23) Inhibitors of acetyl CoA carboxylase
(24) Mitochondrial complex IV electron transport inhibitors
(25) Mitochondrial complex II electron transport inhibitors
(26) Ryanodine receptor modulators
(27) Chordotonal organ modulators and
(28) further pesticidally active compounds.

In a preferred embodiment, said pesticidally active agent is selected from the group consisting of
(1) Acetylcholinesterase (AChE) inhibitors which are carbamates and preferably selected from alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC and xylylcarb, or organophosphates, preferably selected from acephate, azamethiphos, azinphos-ethyl, azinphos-methyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothiophosphoryl) salicylate, isoxathion, malathion, mecarbam, methamidophos, methidathion, mevinphos, monocrotophos, naled, omethoate, oxydemeton-methyl, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, triclorfon and vamidothion;
(2) GABA-gated chloride channel blockers which are cyclodiene-organochlorines and preferably selected from chlordane and endosulfan, or phenylpyrazoles (fiproles) and preferably selected from ethiprole and fipronil;
(3) Sodium channel modulators which are pyrethroids and preferably selected from acrinathrin, allethrin, d-cis-trans allethrin, d-trans allethrin, bifenthrin, bioallethrin, bioallethrin s-cyclopentenyl isomer, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin [(IR)-trans-isomer], deltamethrin, empenthrin [(EZ)-(lR)-isomer], esfenvalerate, etofenprox, fenpropathrin, fenvalerate, flucythrinate, flumethrin, tau-fluvalinate, halfenprox, imiprothrin, kadethrin, momfluorothrin, permethrin, phenothrin [(IR)-trans-isomer], prallethrin, pyrethrins (pyrethrum), resmethrin, silafluofen, tefluthrin, tetramethrin, tetramethrin [(1R)- isomer)], tralomethrin, transfluthrin, DDT and methoxychlor;
(4) Nicotinic acetylcholine receptor (nAChR) competitive modulators which are neonicotinoids and preferably selected from acetamiprid, clothianidin, dinotefuran, imidacloprid, nitenpyram, thiacloprid and thiamethoxam, or nicotine, or sulfoximines and preferably selected from sulfoxaflor, or butenolids and preferably selected from flupyradifurone, or mesoionics and preferably selected from triflumezopyrim;
(5) Nicotinic acetylcholine receptor (nAChR) allosteric modulators which are spinosyns and preferably selected from spinetoram and spinosad;
(6) Glutamate-gated chloride channel (GluCl) allosteric modulators which are avermectins/milbemycins and preferably selected from abamectin, emamectin benzoate, lepimectin and milbemectin;
(7) Juvenile hormone mimics which are juvenile hormone analogues and preferably selected from hydroprene, kinoprene, methoprene, fenoxycarb and pyriproxyfen;
(8) Miscellaneous non-specific (multi-site) inhibitors which are alkyl halides and preferably selected from methyl bromide and other alkyl halides, or chloropicrine or sulphuryl fluoride or borax or tartar emetic or methyl isocyanate generators selected from diazomet and metam;
(9) Chordotonal organ TRPV channel modulators selected from pymetrozine and pyrifluquinazone ;
(10) Mite growth inhibitors selected from clofentezine, hexythiazox, diflovidazin and etoxazole;
(11) Microbial disruptors of the insect gut membrane selected from Bacillus thuringiensis subspecies israelensis, Bacillus sphaericus, Bacillus thuringiensis subspecies aizawai, Bacillus thuringiensis subspecies kurstaki, Bacillus thuringiensis subspecies tenebrionis, and pesticidally active proteins, e.g., originating from Bacillus thuringiensis;
(12) Inhibitors of mitochondrial ATP synthase which are ATP disruptors, preferably selected from diafenthiuron, or organotin compounds selected from azocyclotin, cyhexatin and fenbutatin oxide, or propargite or tetradifon;
(13) Uncouplers of oxidative phosphorylation via disruption of the proton gradient selected from chlorfenapyr, DNOC and sulfluramid;
(14) Nicotinic acetylcholine receptor channel blockers selected from bensultap, cartap hydrochloride, thiocylam and thiosultap-sodium;
(15) Inhibitors of chitin biosynthesis, type 0 selected from bistrifluron, chlorfluazuron, diflubenzuron, flucycloxuron, flufenoxuron, hexaflumuron, lufenuron, novaluron, noviflumuron, teflubenzuron and triflumuron;
(16) Inhibitors of chitin biosynthesis, type 1 selected from buprofezin;
(17) Moulting disrupter (in particular for Diptera, i.e., dipterans) selected from cyromazine;
(18) Ecdysone receptor agonists selected from chromafenozide, halofenozide, methoxyfenozide and tebufenozide;
(19) Octopamine receptor agonists selected from amitraz;
(20) Mitochondrial complex III electron transport inhibitors selected from hydramethylnone, acequinocyl and fluacrypyrim;
(21) Mitochondrial complex I electron transport inhibitors which are METI acaricides, preferably selected from fenazaquin, fenpyroximate, pyrimidifen, pyridaben, tebufenpyrad and tolfenpyrad, or rotenone (Derris);
(22) Voltage-dependent sodium channel blockers selected from indoxacarb and metaflumizone;
(23) Inhibitors of acetyl CoA carboxylase which are tetronic and tetramic acid derivatives, preferably selected from spirodiclofen, spiromesifen and spirotetramat;
(24) Mitochondrial complex IV electron transport inhibitors which are phosphines, preferably selected from aluminium phosphide, calcium phosphide, phosphine and zinc phosphide, or cyanides selected from calcium cyanide, potassium cyanide and sodium cyanide;
(25) Mitochondrial complex II electron transport inhibitors which are beta-ketonitrile derivatives, preferably selected from cyenopyrafen and cyflumetofen, and carboxanilides selected from pyflubumide;
(26) Ryanodine receptor modulators which are diamides, preferably selected from chlorantraniliprole, cyantraniliprole and flubendiamide;
(27) Chordotonal organ Modulators (with undefined target site) selected from flonicamid;
(28) further active compounds selected from acynonapyr, afidopyropen, afoxolaner, azadirachtin, benclothiaz, benzoximate, benzpyrimoxan, bifenazate, broflanilide, bromopropylate, chinomethionat, chloroprallethrin, cryolite, cyclaniliprole, cyclobutrifluram, cycloxaprid, cyhalodiamide, cyproflanilide, dicloromezotiaz, dicofol, dimpropyridaz, epsilon-metofluthrin, epsilon-momfluthrin, flometoquin, fluazaindolizine, fluensulfone, flufenerim, flufenoxystrobin, flufiprole, fluhexafon, flupentiofenox, fluopyram, flupyrimin, fluralaner, fluxametamide, fufenozide, guadipyr, heptafluthrin, imidaclothiz, iprodione, isocycloseram, kappa-bifenthrin, kappa- tefluthrin, lotilaner, meperfluthrin, oxazosulfyl, paichongding, pyridalyl, pyrifluquinazon, pyriminostrobin, spirobudiclofen, spiropidion, sulfur, tetramethylfluthrin, tetraniliprole, tetrachlorantraniliprole, tigolaner, tioxazafen, thiofluoximate, iodomethane; 1-{2-fluoro-4-methyl-5- [(2,2,2-trifluoroethyl)sulphinyl]phenyl}-3-(trifluoromethyl)-1H-1,2,4-triazole-5-amine, {1'-[(2E)-3-(4-chlorophenyl)prop-2-en-1-yl]-5-fluorospiro [indol-3,4'-piperidin]-1(2H)-yl} (2-chloropyridin-4-yl)methanone, 2-chloro-N-[2-{1-[(2E)-3-(4-chlorophenyl)prop-2-en-1-yl]piperidin-4-yl} -4- (trifluoromethyl)phenyl]isonicotinamide, 3-(4-chloro-2,6-dimethylphenyl)-4-hydroxy-8- methoxy-1,8-diazaspiro[4.5]dec-3-en-2-one, 3-(4-chloro-2,6-dimethylphenyl)-8-methoxy-2-oxo- 1,8-diazaspiro[4.5]dec-3-en-4-yl ethyl carbonate, 4-(but-2-yn-1-yloxy)-6-(3,5-dimethylpiperidin-1-yl)-5-fluoropyrimidine, PF1364 (known from JP2010/018586), (3E)-3-[1-[(6-chloro-3-pyridyl)methyl]-2-pyridylidene]- 1 ,1,1 -trifluoro-propan-2-one, N-[3-(benzylcarbamoyl)-4- chlorophenyl]-l-methyl-3-(pentafluoroethyl)-4-(trifluoromethyl)-1H-pyrazole-5-carboxamide, 5- bromo-4-chloro-N-[4-chloro-2-methyl-6-(methylcarbamoyl)phenyl]-2-(3-chloro-2-pyridyl)pyrazole-3-carboxamide, 4-[5-(3,5-dichlorophenyl)-4,5-dihydro-5-(trifluoromethyl)-3-isoxazolyl]-2-methyl- N-(cis-l-oxido-3-thietanyl)-benzamide, 4-[5-(3,5-dichlorophenyl)-4,5-dihydro-5-(trifluoromethyl)-3-isoxazolyl]-2-methyl-N-(trans-1-oxido-3-thietanyl)-benzamide and 4-[(5S)-5-(3,5- dichlorophenyl)-4,5-dihydro-5-(trifluoromethyl)-3-isoxazolyl]-2-methyl-N-(cis-1-oxido-3- thietanyl)benzamide, N-[3-chloro-1-(3-pyridinyl)-1H-pyrazol-4-yl]-N-ethyl-3-[(3,3,3- trifluoropropyl)sulfinyll]-propanamide, (+)-N-[3-chloro-l-(3-pyridinyl)-1H-pyrazol-4-yl]-N- ethyl-3-[(3,3,3-trifluoropropyl)sulfinyl]-propanamide and (-)-N-[3-chloro-l-(3-pyridinyl)-1H-pyrazol-4- yl]-N-ethyl-3-[(3,3,3-trifluoropropyl)sulfinyl]-propanamide, 5-[[(2E)-3-chloro-2-propen-1-yl]amino]-1-[2,6-dichloro-4-(trifluoromethyl)phenyl]-4-[(trifluoromethyl)sulfinyl]-1H-pyrazole-3-carbonitrile, 3-bromo-N-[4-chloro-2-methyl-6-[(methylamino)thioxomethyl]phenyl]-1-(3-chloro-2-pyridinyl)-1H-pyrazole-5-carboxamide; N-[4-chloro-2-[[(1,1-dimethylethyl)amino] carbonyl] -6-methylphenyl]-1-(3 -chloro-2-pyridinyl)-3-(fluoromethoxy)-1H-Pyrazole-5-carboxamide, N-[2-(5-amino-1,3,4-thiadiazol-2-yl)-4-chloro-6-methylphenyl]-3-bromo-1-(3-chloro-2-pyridinyl)-1H-pyrazole-5-carboxamide, 4-[3-[2,6-dichloro-4-[(3,3-dichloro-2-propen-1-yl)oxy]phenoxy]propoxy]-2-methoxy-6-(trifluoromethyl)-pyrimidine; (2E)- and 2(Z)-2-[2-(4-cyanophenyl)-1-[3-(trifluoromethyl)phenyl]ethylidene]-N-[4-(difluoromethoxy)phenyl]-hydrazinecarboxamide; 3-(2,2-dichloroethenyl)-2,2-dimethyl-4-(1H- benzimidazol-2-yl)phenyl-cyclopropanecarboxylic acid ester; (4aS)-7-chloro-2,5-dihydro-2- [[(methoxycarbonyl)[4-[(trifluoromethyl)thio]phenyl]amino]carbonyl]-indeno[l,2-e][l,3,4]oxadiazine- 4a(3H)-carboxylic acid methyl ester; 6-deoxy-3-O-ethyl-2,4-di-O-methyl-1-[N-[4-[1-[4-(1,1 ,2,2,2-pentafluoroethoxy)phenyl] -1H-1,2,4-triazol-3-yl]phenyl]carbamate] -α-L-mannopyranose; 8-(2-cyclopropylmethoxy-4-trifluoromethylphenoxy)-3-(6-trifluoromethyl-pyridazin-3-yl)-3-aza-bicyclo[3.2. l]octane, (8-anti)-8-(2-cyclopropylmethoxy-4-trifluoromethyl-phenoxy)-3-(6- trifluoromethyl-pyridazin-3 -yl)-3 - aza-bicyclo [3.2.1] octane, (8-syn)-8-(2-cyclopropylmethoxy-4- trifluoromethyl-phenoxy)-3-(6-trifluoromethyl-pyridazin-3-yl)-3-aza-bicyclo [3.2.1] octane, N-[3-chloro-1-(3-pyridinyl)-1H-pyrazol-4-yl]-N-ethyl-3-[(3,3,3-trifluoropropyl)thio]-propanamide and N-[4-(aminothioxomethyl)-2-methyl-6-[(methylamino)carbonyl]phenyl]-3-bromo-l-(3-chloro-2-pyridinyl)- 1H-pyrazole-5-carboxamide, 5-(1,3-dioxan-2-yl)-4-[[4-(trifluoromethyl)phenyl]methoxy]-pyrimidine, 3-(4-chloro-2,6-dimethylphenyl)-8-methoxy-1-methyl-1,8-diazaspiro[4.5]decane-2,4-dione, 3-(4-chloro-2,6-dimethylphenyl)-8-methoxy-l-methyl-2-oxo-1,8-diazaspiro[4.5]dec-3-en-4-yl-carbonic acid ethyl ester, and 4-[(5S)-5-(3,5-Dichloro-4-fluorophenyl)-4,5-dihydro-5-(trifluoromethyl)-3-isoxazolyl]-N-[(4R)-2-ethyl-3-oxo-4-isoxazobdinyl]-2-methyl-benzamide, 2-({2-fluoro-4-methyl-5-[(R)-(2,2,2-trifluoroethyl)sulfinyl]phenyl}imino)-3-(2,2,2-trifluoroethyl)-1,3-thiazolodin-4-one,1,4-dimethy -2-[2-(pyridin-3-yl)-2H-indazol-5-yl]-1 ,2,4-triazolidine-3 ,5-dione and a terpene blend comprising as active ingredients substantially pure α-terpinene, substantially pure p-cymene and substantially pure limonene in a relative ratio of about 35-45: 12-20: 10-15.

In one embodiment, the pesticidally active agent is a biological control agent.

As used herein, "biological control" is defined as control of an insect and/or an acarid and/or a nematode by the use of an organism such as a microorganism or metabolite produced by such microorganism. In some cases, biological control is also achieved by the use of naturally occurring compounds or compounds derived from such naturally occurring compounds.

According to one embodiment of the present invention, the biological control agent comprises not only the isolated, pure cultures of the respective fungus or bacterium, in particular the pesticidally active fungus or bacterium but also suspensions in a whole broth culture or a metabolite-containing supernatant or a purified metabolite obtained from whole broth culture of the fungal or bacterial strain. "Whole broth culture" refers to a liquid culture containing both cells and media. "Supernatant" refers to the liquid broth remaining when cells grown in broth are removed by centrifugation, filtration, sedimentation, or other means well known in the art. According to another embodiment, the biological control agent comprises the isolated, pure cultures of the respective fungus or bacterium formulated in a suitable formulation apart from its fermentation broth, as described further below.

Said biological control agent may be an insecticidally active biological control agent selected from the group consisting of:
(1) bacteria selected from the group consisting of Bacillus thuringiensis subsp. aizawai, in particular strain ABTS-1857 (SD-1372; e.g. XENTARI^{®} from Valent BioSciences); Bacillus mycoides, isolate J. (e.g. BmJ from Certis USA LLC, a subsidiary of Mitsui & Co.); Bacillus sphaericus, in particular Serotype H5a5b strain 2362 (strain ABTS-1743) (e.g. VECTOLEX^{®} from Valent BioSciences, US); Bacillus thuringiensis subsp. kurstaki strain BMP 123 from Becker Microbial Products, IL; Bacillus thuringiensis subsp. aizawai, in particular serotype H-7 (e.g. FLORBAC^{®} WG from Valent BioSciences, US); Bacillus thuringiensis subsp. kurstaki strain HD-1 (e.g. DIPEL^{®} ES from Valent BioSciences, US); Bacillus thuringiensis subsp. kurstaki strain BMP 123 by Becker Microbial Products, IL; Bacillus thuringiensis israelensis strain BMP 144 (e.g. AQUABAC^{®} by Becker Microbial Products IL); Burkholderia spp., in particular Burkholderia rinojensis strain A396 (also known as Burkholderia rinojensis strain MBI 305) (Accession No. NRRL B-50319; WO 2011/106491 and WO 2013/032693; e.g. MBI-206 TGAI and ZELTO^{®} from Marrone Bio Innovations); Chromobacterium subtsugae, in particular strain PRAA4-1T (MBI-203; e.g. GRANDEVO^{®} from Marrone Bio Innovations); Paenibacillus popilliae (formerly Bacillus popilliae; e g. MILKY SPORE POWDERTM and MILKY SPORE GRANULARTM from St. Gabriel Laboratories); Bacillus thuringiensis subsp. israelensis (serotype El-14) strain AM65-52 (Accession No. ATCC 1276) (e.g. VECTOBAC^{®} by Valent BioSciences, US); Bacillus thuringiensis var. kurstaki strain EVB-113-19 (e.g., BIOPROTEC^{®} from AEF Global); Bacillus thuringiensis subsp. tenebrionis strain NB 176 (SD-5428; e.g. NOVODOR^{®} FC from BioFa DE); Bacillus thuringiensis var. japonensis strain Buibui; Bacillus thuringiensis subsp. kurstaki strain ABTS 351; Bacillus thuringiensis subsp. kurstaki strain PB 54; Bacillus thuringiensis subsp. kurstaki strain SA 11; Bacillus thuringiensis subsp. kurstaki strain SA 12; Bacillus thuringiensis subsp. kurstaki strain EG 2348; Bacillus thuringiensis var. Colmeri (e.g. TIANBAOBTC by Changzhou Jianghai Chemical Factory); Bacillus thuringiensis subsp. aizawai strain GC-91; Serratia entomophila (e.g. INVADE^{®} by Wrightson Seeds); Serratia marcescens, in particular strain SRM (Accession No. MTCC 8708); and Wolbachia pipientis ZAP strain (e.g., ZAP MALES^{®} from MosquitoMate); and
(2) fungi selected from the group consisting of Muscodor albus, in particular strain QST 20799 (Accession No. NRRL 30547); Muscodor roseus in particular strain A3-5 (Accession No. NRRL 30548); Beauveria bassiana, in particular strain ATCC 74040 (e.g. Naturalis^{®} from Intrachem Bio Italia); strain GHA (Accession No. ATCC74250; e.g. BotaniGuard Es and Mycotrol-0 from Laverlam International Corporation); strain ATP02 (Accession No. DSM 24665); strain PPRI 5339 (e.g. BroadBand^{™} from BASF); strain PPRI 7315, strain R444 (e.g. Bb-Protec from Andermatt Biocontrol), strains IL197, IL12, II,236, IL10, II, 131, II,116 (all referenced in laronski, 2007. Use of Entomopathogenic Fungi in Biological Pest Management, 2007: ISBN: 978-81-308-0192-6), strain Bv025 (see e.g., Garcia et al. 2006. Manejo Integrado de Plagas y Agroecologia (Costa Rica) No. 77); strain BaGPK; strain ICPE 279, strain CG 716 (e.g. BoveMax^{®} from Novozymes); Hirsutella citriformis, Hirsutella thompsonii (e.g. Mycohit and ABTEC from Agro Bio-tech Research Centre, IN); Lecanici Ilium lecanii (formerly known as Verticillium lecanii), in particular conidia of strain KV01 (e.g. Mycotal^{®} and Vertalec^{®} from Koppert/Arysta), strain DAOM198499 or strain DAOM216596; Lecanicillium muscarium (formerly Verticillium lecanii), in particular strain VE 6 / CABI(=IMI) 268317/ CBS102071/ ARSEF5128 (e.g. Mycotal from Koppert); Metarhizium anisopliae var acridum, e.g. ARSEF324 from GreenGuard by Becker Underwood, US or isolate IMI 330189 (ARSEF7486; e.g. Green Muscle by Biological Control Products); Metarhizium brunneum, e.g. strain Cb 15 (e.g. ATTRACAP^{®} from BIOCARE); Metarhizium anisopliae, e.g. strain ESALQ 1037 (e.g. from Metarril^{®} SP Organic), strain E-9 (e.g. from Metarril^{®} SP Organic), strain M206077, strain C4-B (NRRL 30905), strain ESC1, strain 15013-1 (NRRL 67073), strain 3213-1 (NRRL 67074), strain C20091, strain C20092, strain F52 (DSM3884/ ATCC 90448; e.g. BIO 1020 by Bayer CropScience and also e.g. Met52 by Novozymes) or strain ICIPE 78; Metarhizium robertsii 23013-3 (NRRL 67075); Nomuraea rileyi; Paecilomyces fumosoroseus (new: Isaria fumosorosea), in particular strains Apopka 97 (available as PreFeRal from Certis, USA), Fe9901 (available as NoFly from Natural industries, USA), ARSEF 3581, ARSEF 3302, ARSEF 2679 (ARS Collection of Entomopathogenic Fungal Cultures, Ithaca, USA), IfBOl (China Center for Type Culture Collection CCTCC M2012400), ESALQ1296, ESALQ1364, ESALQ1409 (ESALQ: University of Sao Paulo (Piracicaba, SP, Brazil)), CG1228 (EMBRAPA Genetic Resources and Biotechnology (Brasilia, DF, Brazil)), KCH J2 (Dymarska et ah, 2017; PLoS one 12(10)): e0184885), HIB-19, HIB-23, HIB-29, HIB-30 (Gandarilla-Pacheco et ak, 2018; Rev Argent Microbiol 50: 81-89), CHE-CNRCB 304, EH-511/3 (Flores-Villegas et ak, 2016; Parasites & Vectors 2016 9:176 doi: 10.1186/sl3071-016-1453-l), CHE-CNRCB 303, CHE-CNRCB 305, CHE- CNRCB 307 (Gallou et ak, 2016; fungal biology 120 (2016) 414-423), EH-506/3, EH-503/3, EH-520/3, PFCAM, MBP, PSMB1 (National Center for Biololgical Control, Mexico; Castellanos-Moguel et ak, 2013; Revista Mexicana De Micologia 38: 23-33, 2013), RCEF3304 (Meng et ak, 2015; Genet Mol Biol. 2015 Jul-Sep; 38(3): 381-389), PF01-N10 (CCTCC No. M207088), CCM 8367 (Czech Collection of Microorganisms, Bmo), SFP-198 (Kim et ak, 2010; Wiley Online: DOI 10.1002/ps.2020), K3 (Y anagawa et ak, 2015; J Chem Ecok 2015; 41(12): 118-1126), CLO 55 (Ansari Ali et ak, 2011; PLoS One. 2011; 6(1): el6108. DOI: 10.1371/joumakpone.0016108), IfTSOl, HTS02, HTS07 (Dong et ak 2016 / PLoS ONE 11(5): e0156087. doi: 10.1371/joumakpone.0156087), PI (Sun Agro Biotech Research Centre, India), If-02, If-2.3, If-03 (Farooq and Freed, 2016; DOI: 10.1016/j.bjm.2016.06.002), Ifir AsC (Meyer et ak, 2008; J. Invertebr. Pathol. 99:96-102. 10.1016/j jip.2008.03.007), PC-013 (DSMZ 26931), P43A, PCC (Carrillo-Perez et ak, 2012; DOI 10.1007/sl 1274-012-1184-1), Pf04, Pf59, Pfl09 (KimJun et ak, 2013; Mycobiology 2013 Dec; 41(4): 221-224), FG340 (Han et ak, 2014; DOI: 10.5941/MYCO.2014.42.4.385), Pfirl, Pfr8, Pfr9, PfrlO, Pfirl 1, Pfrl2 (Angel-Sahaghn et ak, 2005; Journal of Insect Science), Ifr531 (Daniel and Wyss, 2009; DOI 10.1111/j.1439-0418.2009.01410.x), IF-1106 (Insect Ecology and Biocontrol Laboratory, Shanxi Agricultural University), 19602, 17284 (Hussain et ak 2016, DOI: 10.3390/ijmsl7091518), 103011 (Patent US 4618578), CNRCB1 (Centro Nacional de Referenda de Control Biologico (CNRCB), Colima, Mexico), SCAU-IFCF01 (Nian et ak, 2015; DOI: 10.1002/ps.3977), PF01-N4 (Engineering Research Center of Biological Control, SCAU, Guangzhou, P. R. China) Pfr-612 (Institute of Biotechnology (IB-FCB-UANL), Mexico), Pf-Tim, Pf-Tiz, Pf-Hal, Pf-Tic (Chan-Cupul et ak 2013, DOI: 10.5897/AJMR12.493); Aschersonia aleyrodis; Beauveria brongniartii (e.g. Beaupro from Andermatt Biocontrol AG); Conidiobolus obscurus; Entomophthora virulenta (e.g. Vektor from Ecomic); Lagenidium giganteum; Metarhizium flavoviride; Mucor haemelis (e.g. BioAvard from Indore Biotech Inputs & Research); Nosema locustae; Pandora delphacis; Sporothrix insectorum (e.g. Sporothrix Es from Biocerto, BR); and Zoophtora radicans, and
(3) viruses selected from the group consisting of Adoxophyes honmai nucleopolyhedrovirus (AdhoNPV), e.g. isolate ADN001; Agrotis ipsilon multiple nucleopolyhedrovirus (AgipNPV), e.g. isolate from Illinois; Anticarsia gemmatalis (Woolly pyrol moth) multiple nucleopolyhedrovirus (AgMNPV) (e.g. products Baculo-soja from Nova Era Biotecnologia Agricola; Baculovirus Nitral from Nitral Urbana; Coopervirus SC from COODETEC), e.g. isolate 2D; Autographa califomica (Alfalfa Looper) multiple nucleopolyhedrovirus (AcMNPV) (e.g. product VPN-ULTRA from Agricola El Sol, Loopex from Andermatt Biocontrol, Lepigen from AgBiTech), e.g. isolate C6; Galleria mellonella multiple nucleopolyhedrovirus (GmMNPV); Plutella xylostella multiple nucleopolyhedrovirus, e.g. isolate CL3; Spodoptera exempta multiple nucleopolyhedrovirus (SpexNPV); Trichoplusia ni multiple nucleopolyhedrovirus (TnMNPV); Bombyx mori (silkworm) nucleopolyhedrovirus (BmNPV), e.g. isolate T3; (C3.10) Bombyx mandarina nucleopolyhedrovirus (BomaNPV), e.g. isolate SI; Buzura suppressaria nucleopolyhedrovirus (BuzuNPV), e.g. isolate S13; Choristoneura fumiferana DEF multiple nucleopolyhedrovirus (CfDefNPV); Choristoneura fumiferana multiple nucleopolyhedrovirus (CfMNPV), e.g. isolate from Ireland; Choristoneura rosaceana nucleopolyhedrovirus (ChroNPV); Ecotropis obliqua nucleopolyhedrovirus (EcobNPV), e.g. isolate Al; Epiphyas postvittana nucleopolyhedrovirus (EppoNPV); Heliocoverpa armigera (cotton bollworm) nucleopolyhedrovirus (Hear-NPV) (e.g. Vivus^{®} MAX and Armigen from AgBiTech, Helicovex from Andermatt Biocontrol, Keyun HaNPV), such as isolate C1 (HearNPV-C1), isolate NNG1 (HearNPV- NNG1), isolate G4 (HearNPV-G4; Helicoverpa zea single nucleopolyhedrovirus (HzSNPV) (e.g. Gemstar from Certis USA, Diplomata from Koppert); Lymantria dispar (gypsy moth) multiple nucleopolyhedrovirus (LdMNPV) (e.g. Lymantria dispar from Andermatt Biocontrol, Gypcheck developed by the US Forestry Service); Mamestra brassicae multiple nucleopolyhedrovirus (MbMNPV), e.g. isolate from Oxford; Mamestra configurata nucleopolyhedrovirus A (MacoNPV-A), e.g. isolate 90/2 or isolate 90/4; Mamestra configurata nucleopolyhedrovirus B (MacoNPV-B), e.g. isolate 96B; Orgyia pseudotsugata (Douglas-fir tussock moth) multiple nucleopolyhedrovirus (OpMNPV) (e.g. Virtuss); Spodoptera exigua (beet armyworm) multiple nucleopolyhedrovirus (SeMNPV) (e.g. Spexit from Andermatt Biocontrol, Spod-X LC from Certis USA, Keyun SeNPV), e.g. isolate from the US; Spodoptera frugiperda (fall armyworm) multiple nucleopolyhedrovirus (SfMNPV) (e.g. Fawligen from AgBiTech), e.g. isolate 3AP2 or isolate 6NR; Spodoptera littoralis (African cotton leafworm) nucleopolyhedrovirus (SpliNPV) (e.g. Littovir from Andermatt Biocontrol), e.g. isolate M2; Spodoptera litura (oriental leafworm moth) nucleopolyhedrovirus (SpltNPV) (e.g. Keyun SpltNPV), e.g. isolate G2; Thysanoplusia orichalcea nucleopolyhedrovirus (ThorNPV), e.g. isolate A28; Trichoplusia ni single nucleopolyhedrovirus (TnSNPV); (C3.30) Wiseana signata nucleopolyhedrovirus (WisiNPV); Adoxophyes orana (summer fruit tortrix) granulovirus (AdorGV) (e.g. Capex from Andermatt Biocontrol); Agrotis segetum nucleopolyhedrovirus A (AgseNPV); Anagrapha falcifera multiple nucleopolyhedrovirus (AnfaNPV); Antheraea pemyi nucleopolyhedrovirus (AnpeNPV); Chrysodeixis chalcites nucleopolyhedrovirus (ChchNPV); Clanis bilineata nucleopolyhedrovirus (ClbiNPV); Euproctis pseudoconspersa nucleopolyhedrovirus (EupsNPV); Hyphantria cunea nucleopolyhedrovirus (HycuNPV); Leucania separata nucleopolyhedrovirus (LeseNPV); Maruca vitrata nucleopolyhedrovirus (MaviNPV); Orgyia leucostigma nucleopolyhedrovirus (OrleNPV); Orgyia pseudotsugata single nucleopolyhedrovirus (OpSNPV); Panolis flammea nucleopolyhedrovirus (PaflNPV); Rachiplusia ou multiple nucleopolyhedrovirus (RoMNPV); Erinnyis ello (homworm) GV (ErelGV), e.g. isolate VG010; Artogeia rapae granulovirus (ArGV); Pieris brassicae granulovirus (PbGV), e.g. isolate 384; Choristoneura fumiferana granulovirus (ChfuGV), e.g. isolate Bonaventure; Cryptophlebia leucotreta (false codling moth) granulovirus (CrleGV) (e.g. Cryptex from Andermatt Biocontrol), e.g. isolate CV3; Cydia pomonella (codling moth) granulovirus (CpGV) (e.g. Madex^{®} products from Andermatt Biocontrol, Carpovirus Plus from AgroRoca SA), e.g. isolate Ml; Harrisina brillians granulovirus (HabrGV), e.g. isolate M2; Helicoverpa armigera (cotton bollworm) granulovirus (HearGV); Lacanobia oleracea granulovirus (LaolGV), e.g. isolate SI; Phthorimaea operculella (tobacco leaf miner) granulovirus (PhopGV) (e.g. Tutavir from Andermatt Biocontrol, Matapol); Plodia interpunctella granulovirus (PiGV), e.g. isolate B3; Plutella xylostella granulovirus (PlxyGV) (e.g. Plutellavex^{®} from Keyun), e.g. isolate Kl; Pseudalatia unipuncta granulovirus (PsunGV), e.g. Hawaiian isolate; Trichoplusia ni granulovirus (TnGV), e.g. isolate M10-5: Xestia c-nigrum granulovirus (XecnGV), e.g. isolate alpha4; Agrotis segetum granulovirus (AgseGV), e.g. isolate Xinjiang; Choristoneura occidentalis granulovirus (ChocGV); Spodoptera litura (oriental leafworm moth) granulovirus (SpliGV), e.g. isolate Kl; Neodiprion lecontei (red-headed pinesawfly) nucleopolyhedrovirus (NeleNPV) (e.g. Lecontvirus from SYLVAR); Neodiprion sertifer (Pine sawfly) nucleopolyhedrovirus (NeseNPV) (e.g. Neocheck-S developed by the US Forestry Service; Gilpinia hercyniae nucleopolyhedrovirus (GiheNPV), e.g. isolate i7; Neodiprion abietis (balsam-fir sawfly) nucleopolyhedrovirus (NeabNPV) (e.g. ABIETIV from SYLVAR); Culex nigripalpus nucleopolyhedrovirus (CuniNPV), e.g. isolate from Florida (1997); Aedes sollicitans nucleopolyhedrovirus (AesoNPV); Uranotaenia sapphrinia nucleopolyhedrovirus (UrsaNPV); Spodoptera albula (gray-streaked armywom moth) NPV (e.g. VPN-ULTRA from Agricola El Sol); Biston suppressaria (tea looper) NPV; Dendrolimus punctatus (Masson pine moth) CPV; Leucoma salicis (satin moth) NPV; Spodoptera frugiperda granulovirus (SfGV), e.g. isolate ARG; Spodoptera sunia nulear polyhedrosisvirus (e.g. VPN 82 from Agricola El Sol); Pieris rapae (small white) GV (PiraGV); Spodoptera exigua (beet armyworm) nucleopolyhedrovirus (SeNPV) (e.g. Keyun SeNPV) and Zucchini yellow mosaic virus.
   Said biological control agent may be a nematicidally active biological control agent selected from the group consisting of
(4) bacteria, for example Bacillus subtilis, in particular strain QST713/AQ713 (having NRRL Accession No. B-21661; available as SERENADE^{®} OPTI or SERENADE^{®} ASO from Bayer CropScience LP, US); Bacillus pumilus, in particular strain QST2808 (having Accession No. NRRL No. B-30087); Bacillus firmus, in particular, strain CNMC 1-1582 (e.g. VOTIVO^{®} from BASF SE); Bacillus amyloliquefaciens, in particular strain FZB42 (e.g. RHIZOVITAL^{®} from ABiTEP, DE); Bacillus amyloliquefaciens strain PTA-4838 (AVEO EZ^{®} from Valent/Sumitomo; VARNIMO^{®} ST from LidoChem); Bacillus cereus, in particular spores of Bacillus cereus strain CNCM 1-1562 (cf. US 6,406,690); Bacillus laterosporus (also known as Brevibacillus laterosporus; e.g. BIO-TODE^{®} from Agro-Organics, ZA); Bacillus megaterium, strain YFM3.25 (e.g. BIOARC^{®} from BioArc); Bacillus mojavensis, strain SR11 (CECT-7666; by Probelte S.A); Bacillus nematocida B16 (CGMCC Accession No. 1128); a mixture of Bacillus licheniformis FMCHOOl and Bacillus subtilis FMCH002 (available as QUARTZO^{®} (WG), PRESENCE^{®} (WP) from FMC Corporation); Pasteuria nishizawae (e.g. OYACYST^{®} LF/ST from Pasteuria Bioscience; CLARIVA^{®} PN from Syngenta/ChemChina); Burkholderia rinojensis strain A396 (also known as Burkholderia rinojensis strain MBI 305) (Accession No. NRRL B-50319; WO 2011/106491 and WO 2013/032693; MAJESTENE^{®} from Marrone Bio Innovations); Pasteuria penetrans; Pasteuria usgae (e.g. ECONEM^{™} from Pasteuria Bioscience); Streptomycete sp., such as Streptomyces lydicus strain WYEC108 (also known as Streptomyces lydicus strain WY CD 108US) (ACTINO-IRON^{®} and ACTINOVATE^{®} from Novozymes); Streptomyces saraceticus (e.g. CLANDA^{®} from A & A Group (Agro Chemical Corp.); Bacillus thuringiensis strain CR-371 (Accession No. ATCC 55273); Bacillus cepacia (e.g. DENY^{®} from Stine Microbial Products); Lysobacter enzymogenes, in particular strain C3 (cf. J Nematol. 2006 June, 38(2): 233-239 and Biological Control 2018 February, 117: 158-163); and
   fungi, for example Muscodor albus, in particular strain QST 20799 (Accession No. NRRL 30547); Muscodor roseus, in particular strain A3-5 (Accession No. NRRL 30548); Purpureocillium lilacinum (previously known as Paecilomyces lilacinus), in particular P. lilacinum strain 251 (AGAL 89/030550; e.g. BioAct from Bayer CropScience Biologies GmbH), strain 580 (BIOSTAT^{®} WP (ATCC No. 38740) by Laverlam), strain in the product BIO-NEMATON^{®} (T. Stanes and Company Ltd.), strain in the product MYSIS^{®} (Varsha Bioscience and Technology India Pvt Ltd.), strain in the product BIOICONEMA^{®} (Nico Orgo Maures, India), strain in the product NEMAT^{®} (Ballagro Agro Tecnologia Ltda, Brazil), and a strain in the product SPECTRUM PAE L^{®} (Promotora Tecnica Industrial, S.A. DE C.V., Mexico); Trichoderma koningii; Harposporium anguillullae; Hirsutella minnesotensis; Monacrosporium cionopagum; Monacrosporium psychrophilum; Myrothecium verrucaria, in particular strain AARC-0255 (e.g. DiTeraTM by Valent Biosciences); Paecilomyces variotii, strain Q-09 (e.g. Nemaquim^{®} from Quimia, MX); Stagonospora phaseoli (e.g. from Syngenta); Trichoderma lignorum, in particular strain TL-0601 (e.g. Mycotric from Futureco Bioscience, ES); Fusarium solani, strain Fs5; Hirsutella rhossiliensis; Monacrosporium drechsleri; Monacrosporium gephyropagum; Nematoctonus geogenius; Nematoctonus leiosporus; Neocosmospora vasinfecta; Paraglomus sp, in particular Paraglomus brasilianum; Pochonia chlamydosporia (also known as Vercillium chlamydosporium), in particular var. catenulata (IMI SD 187; e.Fg. KlamiC from The National Center of Animal and Plant Health (CENSA), CU); Stagonospora heteroderae; Meristacrum asterospermum, and Duddingtonia flagrans.

The combinations comprising mixtures of pelargonic acid and one or more active agents as described above can be applied, for example, in a single "ready-mix" form, in a combined spray mixture composed from separate formulations of the single active agent components, such as a "tank-mix", and in a combined use of (A) a pelargonic acid, or derivative thereof, and (B) a separate composition comprising the additional active agent when applied in a sequential manner, i.e., one after the other with a reasonably short period, such as a few hours or days. The order of applying the pelargonic acid, or derivative thereof, and the active agents as described above is not essential for working the present invention.

The following description and examples are shown for exemplary and explanatory purposes and are not intended to limit the scope of the present invention.

The features and characteristics illustrated and/or described herein in connection with various examples presented herein may be combined with the features and characteristics of other examples also provided herein and such modifications and variations are intended to be included within the scope of the present invention.

For the purpose of the present disclosure, following terms have the following meaning:
As used herein, and unless otherwise indicated, the term "about" when used in connection with numeric values, parameters or numerical ranges such as amounts, volumes, volume ratios, volume percentages, weight ratios, weight percentages, or application rates of ingredients of a composition, means an amount, a volume, a volume ratio, a volume percentage, a weight ratio, a weight percentage, or an application rate that is recognized by those of ordinary skill in the art to provide a desired effect equivalent to that obtained from the specified amount, volume, volume ratios, volume percentages, weight ratio, weight percentage, or application rate, is encompassed herein and should be construed in light of the number of reported significant digits and applying ordinary rounding techniques.

Any numerical range disclosed herein is meant to include all sub-ranges subsumed within the recited one. For instance, range from 1 to 10 includes all sub-ranges between and including the recited minimal value 1 and the recited maximum value 10 and any value in-between, including any and all decimal values.

As used herein, a "composition" comprises at least one active ingredient and at least one auxiliary agent.

In the present invention, an "active ingredient" is a compound which directly exerts a biologically relevant effect, preferably a pesticidal effect or biostimulant effect as described herein.

The term "auxiliary agent" or "auxiliary" refers to a compound or combination of compounds which do not exert a biologically relevant effect of their own but support the effects of the active ingredient(s). When auxiliary agents are used, their choice will depend on the active ingredients and on the procedures selected for the treatment.

### Examples

In the following examples, following abbreviations shall be used:
- AT:: after treatment
- DAT/DAA:: days after treatment/days after application
- DAI:: days after inoculation
- 0 - 5:: damage scale (0=no damage or no sucking observed; 1=some damage or some sucking observed; 3=half leaf eaten or half of aphids sucking the leaf; 5=no leaf left or all insects sucking and reproducing)
- UNCK:: untreated check
- BBCH :: scale used to identify the phenological development stages of plants

All applications below were made with an EC formulation containing 650 g/L of pelargonic acid (685 g/L of 95% purity pelargonic acid), an anionic emulsifier and a branched fatty acid ester solvent, unless it is noted otherwise.

### Example 1. Inducing insecticidal responses in crops

### Example 1a.

- DISEASE/PEST:: English grain aphid (*Sitobion avenae*)
- CROP:: WHEAT (*Triticum aestivum*)
- APPLICATION:: FOLIAR
- PROTOCOL:: *T. aestivum* plants were grown in pots (8x8 cm) in the greenhouse until reaching a height of 10 cm. Each pot contained 50 seeds.
Each treatment consisted of 3 replicates. Plants were sprayed with a handheld sprayer containing 0.65 g of pelargonic acid in 500 mL of water for the 3 replicates. Control plants were sprayed with water.
Spraying solutions (as noted in the Table 1) were prepared freshly before treatment.
*S. avenae* (N=10) were added 1 hour after spraying. Insects were counted, 1, 4, 6, 12 and 14 days after the treatment applied.
Insects were counted, 1, 4, 6, 12 and 14 days after the treatment applied.

**Table 1. Efficacy assessment survival of S. avenae on T. aestivum (number of aphids)**

| | 1 DAT | 4 DAT | 6 DAT | 12 DAT | 14 DAT |
|---|---|---|---|---|---|
| UNCK | 2 | 3.2 | 4.2 | 15.8 | 50.2 |
| 0.65 g pelargonic acid | 3 | 4.2 | 7.4 | 9.6 | 15 |

### Example 1b.

- DISEASE/PEST:: *Plutella xylostella* / *Myzus persicae*
- CROP:: Chinese cabbage (*Brassica rapa subsp. Pekinensis)*
- APPLICATION:: FOLIAR on one leaf of the plant
- EXPERIMENT/TRIAL PROTOCOL:: Chinese cabbage plants were grown in pots in the greenhouse (one plant per pot) until they reached 5-6 leaves.
240 µl of solution comprising 0.78 mg of pelargonic acid was applied to one leaf of the plant being careful not to contaminate any other leaves of the plant. Leaves were left to dry for 1 hour.
*P. xylostella* or *M. persicae* were added to clip cages on non-treated leaves 1 hour or 24 hours after the applied treatment wherein those cages restrict the movement of the insects to the other leaves.
Insect survival and leaf damage was assessed 6 days after application and results are presented in Table 2.

**Table 2. Effect on survival and leaf damage of P. xylostella and S. avenea on untreated leaves of B. napus.**

| | *P. xylostella* survival | | *P. xylostella* leaf damage | | *S. avenae* survival | | *S. avenae* sucking | |
|---|---|---|---|---|---|---|---|---|
| | 24h AT | 6 DAT | 24h AT | 6 DAT | 24h AT | 6 DAT | 24h AT | 6 DAT |

| **insects added 1h after treatment** | | | | | | | | |
|---|---|---|---|---|---|---|---|---|
| UNCK | + | + | 3 | 4 | + | + | 1 | 4 |
| 0.78 mg pelargoni c acid | + | growth limited to L3 stage | 1 | 1 | + | + | 0 | 4 |

| **insects added 24 h after treatment** | | | | | | | | |
|---|---|---|---|---|---|---|---|---|
| UNCK | + | + | 3 | 4 | + | + | 1 | 4 |
| 0.78 mg pelargoni c acid | + | + | 4 | 5 | + | Very small colony | 4 | 1 |

Treatment with 0.78mg pelargonic acid results in a reduction in larval maturation and leaf damage in P. xylostella when the insects are introduced 1h after treatment to an untreated leaf of the same plant. Treatment with 0.78mg pelargonic acid results in a reduction in the number of S. avenae individuals and in sucking when the insects are introduced 24h after treatment to an untreated leaf of the same plant.

### Example 1c. Direct effect pelargonic acid (Comparative example)

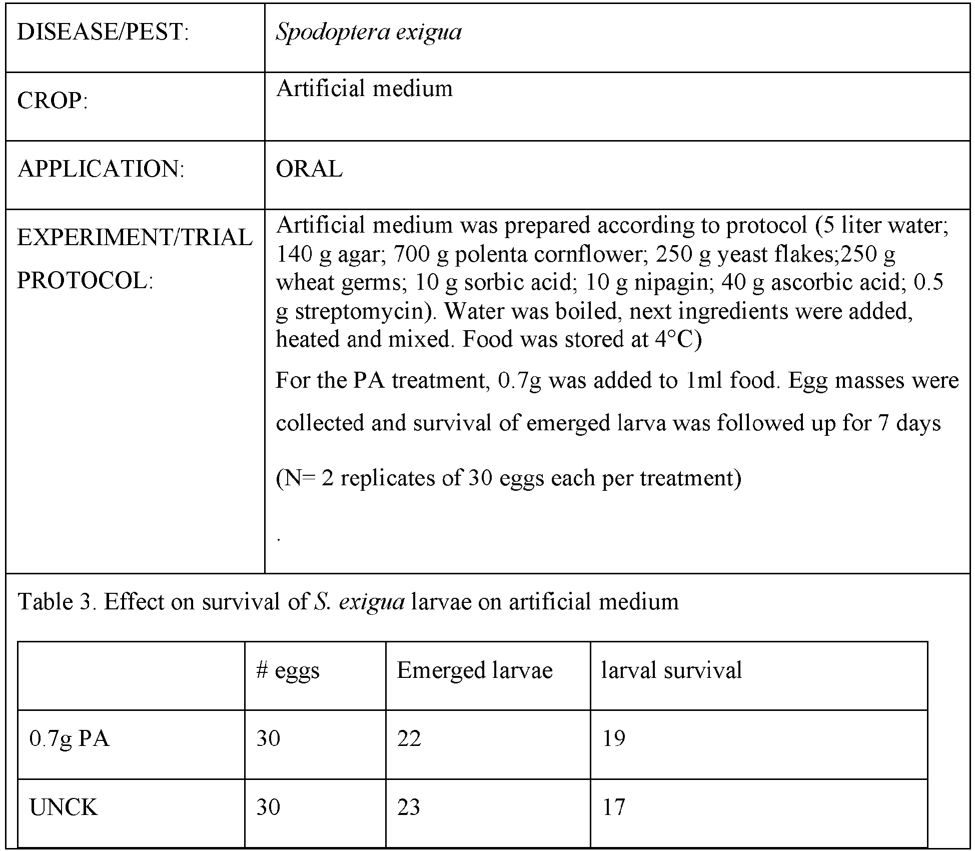

It can be seen from the data in Table 3 that direct feeding of pelargonic acid had no direct control of *S. exigua*.

### Example 1d.

- DISEASE/PEST:: *Spodoptera exigua*
- CROP:: pea plants (*Pisum sativum)*
- APPLICATION:: FOLIAR
- EXPERIMENT/TRIAL PROTOCOL:: Peas were grown in pots in the greenhouse (4 plants/pot). Solutions were prepared freshly before the trial in water by adding 0.016 g of decanoic acid to 5 mL of water with 0.25% tween 20. Plants were sprayed with a small handheld sprayer. 5 ml of spraying volume was applied. First instar (L1) *Spodoptera* larvae were added to the plants 24h after the treatment. Plant damage, larval survival and larval weight were followed up for 12 days.
Treated plants showed minor leaves' damage compared to control and larvae on those plants had significantly lower weight.

**Table 4. Effect on survival and leaf damage of S. exigua on P. sativum.**

| | Number of larvae at start | Number of larvae after 12 days | Larval weight at day 12 (mg) |
|---|---|---|---|
| UNCK | 22 | 16 | 319 |
| Decanoic acid 0.016 g | 22 | 18 | 196 |
| | plant damage (1 to 5 scale) | | |
| Control | 3 | | |
| Decanoic acid 0.016 g | 1 | | |

### Example 1e.

- DISEASE/PEST:: *Meligethes Aeneus*
- CROP:: Oil seed rape (*Brassica napus spp. Campino)*
- APPLICATION:: Foliar spray
- EXPERIMENT/TRIAL PROTOCOL:: Foliar spray was applied in the field with a motorized sprayer in spring when the insects appeared on the crop (BBCH 38-41). The trial design consisted of a randomized complete block with 4 replications per treatment. The treated area per plot was 30m². Used water volume was 300 L/ha. Evaluation was done by counting adult insects per 25 plants. The phytotoxicity was scored with a value in range 0-100% for every treatment.
As demonstrated in Table 5, pelargonic acid shows increasing efficacy over time because of the effect on the plant's immune system (eliciting defense responses). No phytotoxicity was observed at the applied dose rates.

**Table 5: Efficacy assessment: % efficacy versus untreated (%UNCK) of M. aeneus on B. napus (field)**

| | 1DAA | 4DAA | 8DAA |
|---|---|---|---|
| 650 g Pelargonic acid/ha | 34.60 c | 91 b | 89 b |
| 975 g Pelargonic acid/ha | 79.25 ab | 100 a | 100 a |
| Decis^{™} (Bayer) 0,2 L/ha | 59.81 b | 98 a | 100 a |
| %UNCK | 0.00 d | 0 c | 0 c |

| | | | |
|---|---|---|---|
| Decis EC = deltamethrin | | | |

### Example 1f.

- DISEASE/PEST:: *Cacopsylly pyri*
- CROP:: Pear trees (*pyrus communis spp. Williams)*
- APPLICATION:: Foliar spray (spring - when 50% of eggs are yellow)
- EXPERIMENT/TRIAL PROTOCOL:: Foliar spray was applied in the field with a motorized sprayer (OleomacSP126) in spring when the insects appeared on the crop (BBCH 72-75). The trial design consisted of a randomized complete block with 4 replications per treatment. The treated area per plot was 24m². Used water volume was 800L/ha. Evaluation was done by counting nymphs per 10 shoots. The phytotoxicity was scored with a value in range 0-100% for every treatment.
As demonstrated in Table 6, pelargonic acid shows increasing efficacy over time. This is due to the effect on the plant's immune system. No phytotoxicity was observed at the applied dose rates.

**Table 6. Efficacy assessment: % efficacy versus untreated (%UNCK) of C. pyri on P. communis (field)**

| | 3 DAA | 14 DAA | 21 DAA | 28 DAA |
|---|---|---|---|---|
| 650 g pelargonic acid/ha | 83.8 b | 56.4 b | 63.1 b | 100 b |
| UTC | 0 | 0 | 0 | 0 |

### Example 1g.

- DISEASE/PEST:: Root knot nematode (*Meloidogyne graminicola)*
- CROP:: *Triticum aestivum*
- APPLICATION:: Foliar application
- EXPERIMENT/TRIAL PROTOCOL:: After seed germination, wheat plants were grown individually for 2 weeks in a PVC tube (18 cm height, 3 cm diameter) filled with a substrate of sand and a water-absorbing polymer (DCM Aquaperla). Plants were grown at 24 °C and supplied with Hoagland solution and water 3 times per week. They were treated after 2 weeks. Twenty-four hours after treatment they were inoculated with 400 nematode juveniles (second stage; J2) per plant. 8 individual plants were analyzed per treatment.
Evaluation of nematode infection was done 14 days after inoculation. Development of galls on the roots was microscopically observed and counted. No females were observed yet at this early time point, in any of the treatments.
The number of galls was reduced in the Vertimec, pelargonic acid (PM1), caprylic acid (pm2) and decanoic acid (pm4) treated plants. Azelaic acid (pm3) had no effect on gall numbers in the used concentration.
- FORMULATION USED:: Four different treatments and 2 controls were evaluated:
- Foliar spraying of PM1, stock solution 200 x diluted
- Foliar spraying of PM2, stock solution 200 x diluted
- Foliar spraying of PM3, stock solution 200 x diluted
- Foliar spraying of PM4, stock solution 200 x diluted
- Positive control: soil treatment with Abamectin (0.2% Vertimec)
- Negative control: shoot spraying with water
   All dilutions were made in distilled water. PM1 is already formulated. For PM2-3-4 and the negative control, 0.2% Tween was added as surfactants.

### Example 2. Inducing fungicidal responses in crops

### Example 2a

- DISEASE/PEST:: *Fusarium culmorum*
- CROP:: Wheat (Feeling)
- APPLICATION:: Seed treatment
- EXPERIMENT/TRIAL PROTOCOL:: Lab trials were performed to investigate the plant immunity inducing potential of the fatty acids, especially pelargonic acid against the necrotrophic fungus *Fusarium culmorum.* Seeds were coated in a in Satec ML2000, 8L/ton coater with different concentrations of the fatty acids as listed below. For each concentration 4 repetitions were made.
Five seeds were placed on moister filter paper in petri dishes. The seeds were germinated in an incubator on 20° in a 12h light/12h dark regime. Four days after starting the trial, the seedlings were infected with a spore suspension of the pathogen in a concentration of 1.10⁵ spores/ml in 1/8 potato dextrose broth. For each Petri dish, 3ml of spore suspension is added to ensure infection. Plant health was monitored every day after infection until 2 weeks after inoculation. The treated objects were compared with untreated healthy seedlings and untreated infected seedlings. The results shown are the % healthy plants (efficacy) compared with the infected seedlings.
Results in Table 7 below were obtained 6 days after inoculation and 13 days after the seed was treated.

**Table 7: Efficacy assessment of fatty acids in seed treatment of Fusarium culmorum in wheat (variety Feeling)**

| ACTIVE INGREDIENT | DOSE | % Efficacy |
|---|---|---|
| Pelargonic acid | 0.38 g/ton | 100 |
| Decanoic acid | 4.56 g/ton | 60 |
| Decanoic acid | 6.08 g/ton | 60 |
| Decanoic acid | 7.60 g/ton | 80 |
| Caprylic acid | 6.08 g/ton | 80 |
| Caprylic acid | 7.60 g/ton | 80 |
| Ammonium percholate | 7.60 g/ton | 60 |

### Example 2b

| | |
|---|---|
| DISEASE/PEST: | *Leptosphaeria maculans* |
| CROP: | Oilseed rape (Helga) |
| APPLICATION: | Seed treatment |
| EXPERIMENT/TRIAL PROTOCOL: | Lab trials were performed to investigate the plant immunity inducing potential of the fatty acids listed below against the hemi biotrophic fungus *Leptosphaeria maculans*. |
| | Seeds were coated in a in Satec MI,2000, 8l/ton coater with different concentrations of the acids. For each concentration 4 repetitions were made. |
| | Five seeds were placed on moister filter paper in petri dishes. The seeds were germinated in an incubator on 20° in a 12h light/12h dark regime. Four days after starting the trial, the seedlings were infected with a spore suspension of the pathogen in a concentration of 1.10⁵ spores/ml in 1/8 potato dextrose broth. For each Petri dish, 3ml of spore suspension was added to ensure infection. Plant health was monitored every day after infection until 2 weeks after inoculation. The treated objects were compared with untreated healthy seedlings and untreated infected seedlings. The results shown are the % healthy plants (efficacy) compared with the infected seedlings. |
| | Results in Table 8 below were obtained 6 days after inoculation and 13 days after the seed was treated. |

**Table 8: Efficacy assessment of fatty acids in seed treatment of Leptosphaeria maculans in oilseed rape (variety Helga)**

| ACTIVE INGREDIENT | DOSE | % Efficacy |
|---|---|---|
| Pelargonic acid | 0.76 g/ton | 100 |
| Pelargonic acid | 3.04 g/ton | 80 |
| Pelargonic acid | 6.08 g/ton | 80 |
| Pelargonic acid | 7.6 g/ton | 100 |
| Decanoic acid | 2.28 g/ton | 80 |
| Azaleic acid | 1.52 g/ton | 100 |
| Azaleic acid | 2.28 g/ton | 100 |
| Azaleic acid | 3.04 g/ton | 100 |
| Azaleic acid | 4.56 g/ton | 80 |
| Azaleic acid | 6.08 g/ton | 80 |
| Azaleic acid | 7.60 g/ton | 80 |
| Caprylic acid | 7.60 g/ton | 80 |
| Ammonium percholate | 6.08 g/ton | 70 |
| Ammonium percholate | 7.60 g/ton | 70 |

### Example 2c.

| | |
|---|---|
| DISEASE/PEST: | *Puccinia triticina* (PUCCTR) |
| CROP: | Wheat, Benchmark |
| APPLICATION: | Seed treatment |
| EXPERIMENT/TRIAL PROTOCOL: | Greenhouse trials were performed to investigate the potential of pelargonic acid to induce plant immunity as a seed treatment against the biotrophic fungus *Puccinia triticina* (PUCCTR). Seeds were coated in a Satec ML2000, 8l/ton coater with different concentrations of pelargonic acid. Seeds were sown in pottery soil: 4 seeds per pot. For each object (concentration) 5 repetitions were made. Eighteen days after the sowing, the plants were inoculated with a spore suspension of PUCCTR in a concentration of 1.10⁵ spores/ml until run off. After the first symptoms, plants were assessed 11, 13 and 21 days after inoculation. |
| | Determination of the % of spots PUCCTR on the 4 upper leaves of the plants was made and the average severity of every object was calculated. Efficacy is calculated as % in comparison with the untreated control. |
| FORMULATION USED: | Pelargonic acid is diluted in water to have following concentrations of g of ai/ton according to Table 9. |

**Table 9. Efficacy assessment of pelargonic acid as seed treatment of PUCCTR in wheat (variety Benchmark)**

| | | | EFFICACY % | | | | |
|---|---|---|---|---|---|---|---|
| ASSESSMENT DAY | ACTIVE INGREDIENT | DOSE | LEAF 4 | LEAF 3 | LEAF 2 | LEAF 1 | ALL LEAVES |
| 11 dai | Pelargonic acid | 3.8 g ai/ton | 20.0 | 17.6 | 14.3 | 0.0 | 17.3 |
| 11 dai | Pelargonic acid | 7.6 g ai/ton | 70.0 | 11.8 | 7.1 | 0.0 | 29.6 |
| 11 dai | Pelargonic acid | 38 g ai/ton | 0.0 | 11.8 | 7.1 | 0.0 | 6.3 |
| 21 dai | Pelargonic acid | 76 g ai/ton | 14.0 | 12.0 | 18.9 | 31.8 | 19.2 |

### Example 2d.

| | |
|---|---|
| DISEASE/PEST: | *Puccinia triticina* |
| CROP: | Wheat Bechmark |
| APPLICATION: | Foliar treatment |
| EXPERIMENT/TRIAL PROTOCOL: | Greenhouse trials were performed to investigate the potential of pelargonic acid to induce plant immunity as a foliar treatment against the biotrophic fungus *Puccinia triticina* (PUCCTR). Seeds were sown in pottery soil: 4 seeds per pot. For each object (concentration) 5 repetitions were made. Fifteen days after sowing, the plants were treated with different concentrations of pelargonic acid in a spraying cabin using a Albuz ADI 100° drift reducing nozzle which mimics a field application of 200l/ha. Three days after days after treatment, the |
| | plants were inoculated with a spore suspension of PUCCTR in a concentration of 1.10⁵ spores/ml until run off. After the first symptoms, plants were assessed 11, 13 and 21 days after inoculation. |
| | Observation of the % of spots PUCCTR on the 4 upper leaves of the plants was made and the average severity of every object is calculated. Efficacy was calculated as % in comparison with the untreated control. |
| FORMULATION USED: | Pelargonic acid is diluted in water to have following concentrations of g of ai/ha according to the Table 10. |

**Table 10: Efficacy assessment of pelargonic acid as foliar treatment of PUCCTR in wheat (variety Benchmark)**

| | | | EFFICACY % | | | | |
|---|---|---|---|---|---|---|---|
| ASSESSMENT DAY | ACTIVE INGREDIENT | DOSE | LEAF 4 | LEAF 3 | LEAF 2 | LEAF 1 | ALL LEAV ES |
| 13 dai | Pelargonic acid | 1.52 g ai/ha | 12.5 | 5.9 | 5.9 | 50.0 | 18.6 |
| 13 dai | Pelargonic acid | 95 g ai/ha | 0,0 | 11.8 | 0.0 | 33.3 | 11.3 |
| 13 dai | Pelargonic acid | 760 g ai/ha | 43.8 | 0.0 | 11.8 | 66.7 | 30.5 |
| 21 dai | Pelargonic acid | 7.6 g ai/ha | 18.3 | 29.8 | 17.9 | 28.6 | 23.6 |

### Example 2e.

| | |
|---|---|
| DISEASE/PEST: | *Phytophthora infestans (*PHYTIN*)* |
| CROP: | Potato Wilja |
| APPLICATION: | Foliar treatment |
| EXPERIMENT/TRIAL PROTOCOL: | Potatoes were sown in 1l pots (1 potato per pot). For each object 4 replicates were used. Plants were treated with the pelargonic acid product 1 month after sowing with a track sprayer and a volume of 200l/ha. The potatoes were inoculated with *Phytophthora infestans* (PHYTIN) 7 days after treatment by spraying the plants with spore suspension. Disease was assessed by determining the % of PHYTIN infection of the whole plants 3, 7 and 14 days after inoculation. The average disease severity is calculated of each object and compared with the untreated control (% efficacy). |
| FORMULATION USED: | Pelargonic acid in water to required concentration |

**Table 11: Efficacy assessment of Pelargonic acid as foliar treatment PHYTIN in potato (Wilj a)**

| ACTIVE INGREDIENT | DOSE | ASSESSMENT 7 DAI | ASSESSMENT 14 DAI |
|---|---|---|---|
| Pelargonic acid | 7.60 g/ha | 3.0 | 5.4 |
| Pelargonic acid | 5.32 g/ha | 17.7 | 16.7 |
| Pelargonic acid | 3.80 g/ha | 18.6 | 7.0 |
| Pelargonic acid | 2.66 g/ha | 23.0 | 21.9 |
| Pelargonic acid | 1.52 g/ha | 20.1 | 22.0 |
| Pelargonic acid | 1.14 g/ha | 14.0 | 7.9 |
| Pelargonic acid | 0.76 g/ha | 0.2 | 0.0 |

### Example 3. Inducing biostimulant responses in crops

### Example 3a.

| | |
|---|---|
| CROP: | *Solanum tuberosum* |
| APPLICATION: | Foliar application |
| EXPERIMENT/TRIAL PROTOCOL: | Solanum tuberosum plants (BBCH 14-15, 5 replicate pots, 1 plant per pot with multiple shoots per plant) were sprayed with 500ml spraying volume using a standardized spraying cabinet. All spraying solutions were prepared freshly by adding the products to water. |
| | Length of plants and number of tubers were measured 15 days after treatment. Treated plants showed an increase in plant length and number of tubers at day 15 after treatment. |

**Table 12. Biostimulant effect potato**

| **treatment** | **L/ha** | **L water/ha** | **ml/ 0.5L** | **average plant length 15 DAT** | **average # tubers 15 DAT** |
|---|---|---|---|---|---|
| UTC | 0 | 200 | 0.00 | 39.8 | 0.2 |
| 3.25 g pelargonic acid | 2 | 200 | 5.00 | 49 | 2 |
| 3.25 g pelargonic acid + Ranman Top^{®} + Narita 250 EC^{®} | 2+0.5+0.5 | 200 | 5+1.25+1. 25 | 45.8 | 3.6 |
| 3.25 g pelargonic acid + Ravane 50^{®} | 2+0.125 | 200 | 5+0.313 | 55.2 | 3.4 |
| 3.25 g pelargonic acid + Vazyl^{®} | 2+7 | 200 | 5+17.5 | 55.8 | 3 |

| | | | | | |
|---|---|---|---|---|---|
| Narita = Difenoconazole Ranman Top = cyazofamid Ravane = lambda-cyhalothrin Vazyl = paraffin oil | | | | | |

### Example 3b.

| | |
|---|---|
| CROP: | Winter wheat (cv. Keitum) |
| APPLICATION: | Seed treatment |
| EXPERIMENT/TRIAL PROTOCOL: | A greenhouse trial was conducted to investigate the effect of pelargonic acid salts on the growth and development of wheat plants. Seeds were coated in a Satec ML2000, 8l/ton coater with NH4-salt. For each object (treated and untreated) 10 repetitions were conducted. The temperature in the climate-controlled greenhouse was 20 °C during the day and 12 °C at night. The relative humidity was around 60%. |
| | Falcon tubes (50 ml) were filled with 50%sand/50% potting soil. The seeds were placed at 1 cm depth. The plants of the treated object are compared with untreated seedlings. 14 days after sowing the height and the fresh weight of the leaves of each plant were measured and also the number of tillers was counted. On the same day root scans were taken of the plant. These were carried out with the Epson perfection V 370 Photo and processed with WinRHIZO. The program calculated the total root length, the total root surface, the average root diameter, the total root volume, the number of root tips and the number of root branching sites. |
| | Seeds coated with ammonium pelargonate showed an increase in root length, surface and volume and an increase in tips and forks per plant. (Table 12) |
| FORMULATION USED: | NH4-salt Ammonium pelargonate: 8% PVOH in 8l water Concentration tested: 2 L/mt |

**Table 13. Biostimulant effect of ammonium pelargonate on winter wheat (cv. Keitum) 14 days after sowing**

| Treatment seed coating | Plant height (cm) | Root length (cm) | Tillers (#/plant) | Fresh weight (g/plant) | Root volume (cm³) | Root surface (cm²) | Root diameter (mm) | Tips (#/plant) | Forks (#/plant) |
|---|---|---|---|---|---|---|---|---|---|
| UNCK | 22.3 | 108.0 | 0.00 | 0.53 | 0.07 | 9.58 | 0.28 | 1317.00 | 225.50 |
| Ammonium pelargonate 2 L/mt | 22.5 | 142.1 | 0.40 | 0.53 | 0.08 | 11.90 | 0.27 | 1585.20 | 330.70 |
| Ammonium pelargonate 2 L/mt (%UNCK) | 100.9 | 131.5 | | 99.81 | 117.23 | 124.21 | 95.08 | 120.36 | 146.65 |

### Example 4. Inducing abiotic stress responses in crops

### Example 4a.

| | |
|---|---|
| DISEASE/PEST: | Abiotic stress (drought stress and flooding) |
| CROP: | Maize (cultivar Mofox) |
| APPLICATION: | FOLIAR |
| EXPERIMENT/TRIAL PROTOCOL: | Seeds were drilled in trays and placed in a greenhouse. Temp. regime for maize seeds: 25°C for 12h and 15°C at night. Light regime: 16 h light and 8h dark for germination 10 days after sowing the plants were treated with compositions according to the present invention. |
| | 2 days after the treatment 10 plants from every condition were replanted in 8x8 pots. |
| | Stress conditions were the following: no water/daily water gift/constant water supply(flood) |

**Table 14. Efficacy assessment of pelargonic acid foliar treatment as abiotic stress elicitor/biostimulant on maize (cultivar Mofox) in flooding conditions**

| ACTIVE INGREDIENT | DOSE | ASSESSMENT total growth after 15 days (cm) | % total growth to control |
|---|---|---|---|
| WATER/UNTREATED | 0.5 L/ha | 25.2 | 100 % |
| Pelargonic acid | 65 g/ha | 26.3 | 104 % |
| Pelargonic acid | 325 g/ha | 26.1 | 104 % |
| Pelargonic acid | 650 g/ha | 22.6 | 90 % |
| Pelargonic acid | 1300 g/ha | 20.7 | 82 % |

**Table 15. Efficacy assessment of Pelargonic acid foliar treatment as abiotic stress elicitor/biostimulant on maize (cultivar Mofox) in drought conditions**

| ACTIVE INGREDIENT | DOSE | ASSESSMENT total growth after 15 days (cm) | % total growth to control |
|---|---|---|---|
| WATER/UNTREATED | 0.5 L/ha | 19.9 | 100 % |
| Pelargonic acid | 65 g/ha | 17.4 | 87 % |
| Pelargonic acid | 325 g/ha | 17.6 | 87 % |
| Pelargonic acid | 650 g/ha | 22.2 | 112 % |
| Pelargonic acid | 1300 g/ha | 18.2 | 91 % |

**Table 15. Efficacy assessment of pelargonic acid foliar treatment as abiotic stress elicitor/biostimulant on maize (cultivar Mofox) in daily watered (normal) conditions**

| ACTIVE INGREDIENT | DOSE | ASSESSMENT total growth after 15 days (cm) | % total growth to control |
|---|---|---|---|
| WATER/UNTREATED | 0.5 L/ha | 26.0 | 100 % |
| Pelargonic acid | 65 g/ha | 18.4 | 71 % |
| Pelargonic acid | 325 g/ha | 22.5 | 87 % |
| Pelargonic acid | 650 g/ha | 24.8 | 95 % |
| Pelargonic acid | 1300 g/ha | 20.3 | 78 % |

**The following embodiments are encompassed by the present invention:**
A method of inducing defensive responses in useful plants to build up the plants' natural defense system against environmental stresses and pathogens, which comprises applying an effective amount of pelargonic acid, or salt, ester or amide derivatives thereof, to a plant or to a locus of a plant.

A method of inducing defensive responses in useful plants to build up the plants' natural defense system against environmental stresses and pathogens, which comprises applying an effective amount of pelargonic acid, or salt, ester or amide derivatives thereof, to a plant or to a locus of a plant wherein the useful plant is selected from the group consisting of Corn; Cotton; Cereals including wheat (winter and spring), spelt, durum, rye, barley, oats, millet and triticale; Oilseed rape as used herein includes *Brassica napus* subsp. napus, also referred to as Argentine canola, rapeseed or rape and the specific group of cultivars, canola; *Brassica rapa*, also known as Polish Canola and *Brassica juncea,* also known as brown mustard; Perennials as used herein includes Coffee, Fruit trees such as Abiu, Almond, Amla (Indian gooseberry), Apple, Apricot, Avocado, Bael, Ber (Indian plum), Carambola (starfruit), Cashew, Cherry, Citrus (clementine, lemon, lime, orange etc.), Coconut, Crab apple, Damson, Durian, Elderberry, Fig, Grapefruit, Guava, Jackfruit, Jujube, Loquat, Lychee, Mango, Medlar, Morello cherry, Mulberry, Olive, Pawpaw, both the tropical Carica papaya and the North American Asimina triloba, Peach and nectarine, Pear, Pecan, Persimmon, Plum, Pomelo, Quince, Pomegranate, Rambutan, Sapodilla (chikoo), Soursop, Sugar-apple (sharifa), Sweet chestnut, Tamarillo, Ugli fruit, Walnut and Water Apple; and Grapes; Rice; Sorghum, Soybean; Turfgrass; Vegetables including *Brassica oleracea* (e.g., cabbage, Brussels sprouts, cauliflower, broccoli, kale, kohlrabi, red cabbage, Savoy cabbage, Chinese broccoli, collard greens), *Brassica rapa* (e.g., turnip, Chinese cabbage, napa cabbage, bok choy), *Raphanus sativus* (e.g., radish, daikon, seedpod varieties), *Daucus carota* (e.g., carrot); *Pastinaca sativa* (e.g., parsnip), *Beta vulgaris* (e.g., beetroot, sea beet, Swiss chard, sugar beet), *Lactuca sativa* (e.g., lettuce, celtuce), *Aspargus officinalis* (e.g., asparagus), *Phaseolus vulgaris, Phaseolus coccineus* and *Phaseolus lunatus* (e.g., green bean, French bean, runner bean, haricot bean, Lima bean), *Vicia faba* (e.g., broad bean), *Pisum sativum* (e.g., pea, snap pea, snow pea, split pea), *Solanum tuberosum* (e.g., potato), *Solanum melongena* (e.g., eggplant), *Solanum lycopersicum* (e.g., tomato), *Cucumis sativus* (e.g., cucumber), *Cucurbita* spp. (e.g., pumpkin, squash, marrow, zucchini, gourd), *Allium cepa* (e.g., onion, spring onion, scallion, shallot), *Allium sativum* (e.g., garlic), *Allium ampeloprasum* (e.g., leek, elephant garlic), *Capsicum annuum* (e.g., pepper, bell pepper, sweet pepper), *Spinacia oleracea* (e.g., spinach), *Dioscorea* spp. (e.g., yam), *Ipomoea batatas* (e.g., sweet potato) and *Manihot esculenta* (e.g., cassava).

The methods according to the present invention, wherein the pelargonic acid, or salt, ester or amide derivatives thereof, is applied as a composition together with a suitable carrier.

The methods according to the present invention, wherein the pelargonic acid, or salt, ester or amide derivatives thereof, is applied as a foliar spray.

The methods according to the present invention, which comprises applying to a seed a pelargonic acid, or salt, ester or amide derivatives thereof, composition.

A seed treatment composition comprising the pelargonic acid, or salt, ester or amide derivatives thereof, and a suitable carrier.

According to the present invention pelargonic acid, or salt, ester or amide derivatives thereof, is applied at a rate sufficient to activate the plant's defenses against insect pests or to elicit a biostimulant effect. Effective rates for inducing the plant's defenses against insect pests or to elicit a biostimulant effect include from 1 to 2,600 g/ha, preferably from 50 to 1,300 g/ha, more preferably 150 to 650 g/ha.

According to the present invention pelargonic acid, or salt, ester or amide derivatives thereof, is applied at a rate sufficient to deliver pelargonic acid to the useful plants in an amount sufficient to activate the plant's defenses against fungal pathogens. Effective rates for inducing the plant's defenses against fungal pathogens include from 0.3 to 100 g/ha, preferably from 0.3 to 50 g/ha, more preferably from. 0.3 to 10 g/ha.

According to the present invention pelargonic acid, or salt, ester or amide derivatives thereof, is applied to seeds of the useful plants in an amount of from 0.3 grams of pelargonic acid/ton of seeds (g/t) to 100 g/t, preferably from 0.3 to 80 g/t.

Use of pelargonic acid, or derivatives thereof, as plant pathogen defense elicitor.

A method for activating plant defense against plant pathogens comprising contacting a plant with an effective amount of pelargonic acid, or derivatives thereof.

A composition comprising pelargonic acid, or derivatives thereof, and an acceptable carrier comprising one or more anionic, non-ionic, amphoteric, or cationic surfactant, or a combination thereof.

## Claims

1. A method of inducing defensive responses in useful plants to build up the plants' natural defense system against environmental stresses and pathogens, which comprises applying an effective amount of pelargonic acid, or derivatives thereof, to a plant or to a locus of a plant.

2. A method according to claim 1, wherein the useful plant is selected from the group consisting of Corn; Cotton; Cereals including wheat (winter and spring), spelt, durum, rye, barley, oats, millet and triticale; Oilseed rape as used herein includes Brassica napus subsp. napus, also referred to as Argentine canola, rapeseed or rape and the specific group of cultivars, canola; Brassica rapa, also known as Polish Canola and Brassica juncea, also known as brown mustard; Perennials as used herein includes Coffee, Fruit trees such as Abiu, Almond, Amla (Indian gooseberry), Apple, Apricot, Avocado, Bael, Ber (Indian plum), Carambola (starfruit), Cashew, Cherry, Citrus (clementine, lemon, lime, orange etc.), Coconut, Crab apple, Damson, Durian, Elderberry, Fig, Grapefruit, Guava, Jackfruit, Jujube, Loquat, Lychee, Mango, Medlar, Morello cherry, Mulberry, Olive, Pawpaw, both the tropical Carica papaya and the North American Asimina triloba, Peach and nectarine, Pear, Pecan, Persimmon, Plum, Pomelo, Quince, Pomegranate, Rambutan, Sapodilla (chikoo), Soursop, Sugar-apple (sharifa), Sweet chestnut, Tamarillo, Ugli fruit, Walnut and Water Apple; and Grapes; Rice; Sorghum, Soybean; Turfgrass; Vegetables including Brassica oleracea (e.g., cabbage, Brussels sprouts, cauliflower, broccoli, kale, kohlrabi, red cabbage, Savoy cabbage, Chinese broccoli, collard greens), Brassica rapa (e.g., turnip, Chinese cabbage, napa cabbage, bok choy), Raphanus sativus (e.g., radish, daikon, seedpod varieties), Daucus carota (e.g., carrot); Pastinaca sativa (e.g., parsnip), Beta vulgaris (e.g., beetroot, sea beet, Swiss chard, sugar beet), Lactuca sativa (e.g., lettuce, celtuce), Aspargus officinalis (e.g., asparagus), Phaseolus vulgaris, Phaseolus coccineus and Phaseolus lunatus (e.g., green bean, French bean, runner bean, haricot bean, Lima bean), Vicia faba (e.g., broad bean), Pisum sativum (e.g., pea, snap pea, snow pea, split pea), Solanum tuberosum (e.g., potato), Solanum melongena (e.g., eggplant), Solanum lycopersicum (e.g., tomato), Cucumis sativus (e.g., cucumber), Cucurbita spp. (e.g., pumpkin, squash, marrow, zucchini, gourd), Allium cepa (e.g., onion, spring onion, scallion, shallot), Allium sativum (e.g., garlic), Allium ampeloprasum (e.g., leek, elephant garlic), Capsicum annuum (e.g., pepper, bell pepper, sweet pepper), Spinacia oleracea (e.g., spinach), Dioscorea spp. (e.g., yam), Ipomoea batatas (e.g., sweet potato) and Manihot esculenta (e.g., cassava).

3. A method according to claim 1, wherein the pelargonic acid, or derivative thereof, is applied as a composition together with a suitable carrier.

4. A method according to claim 1, wherein the environmental stresses are insects, and the pelargonic acid, or derivate thereof, is applied to the plant or plant parts in an amount sufficient to activate the plant's defenses against insect pests.

5. A method according to claim 1, wherein the environmental stresses are fungal pathogens, and the pelargonic acid, or derivate thereof, is applied to the plant or plant parts in an amount sufficient to activate the plant's defenses against fungal pathogens.

6. A method according to claim 1, wherein the environmental stresses are abiotic stresses, and the pelargonic acid, or derivative thereof, is applied in amount sufficient to elicit a biostimulant effect.

7. A method according to any of claims 1 to 6, wherein the pelargonic acid, and compositions thereof, are applied as a foliar spray.

8. A method according to claim 7, wherein the composition is applied in an amount sufficient to deliver pelargonic acid, or derivatives thereof, to the useful plants in an amount of from 1 to 2,600 g/ha, preferable 50 to 1,300 g/ha, more preferably 150 to 650 g/ha.

9. A method according to claim 7, wherein the composition is applied in an amount sufficient to deliver pelargonic acid, or derivatives thereof, to the useful plants in an amount of from 0.3 to 100 g/ha, preferably from 0.3 to 50 g/ha, more preferably from. 0.3 to 10 g/ha.

10. A method according to any of claims 1 to 6, wherein the composition is applied to a seed.

11. A method according to claim 10, wherein the composition is applied in an amount sufficient to deliver pelargonic acid to seeds of the useful plant in an amount from 0.3 to 100 g/t, preferably from 0.3 to 80 g/t.

12. Use of pelargonic acid, or derivatives thereof, as a plant pathogen defense elicitor.
